# EUROPEAN PATENT SPECIFICATION

(11) **EP 4 261 711 B1**
(45) Date of publication and mention of the grant of the patent: **29.07.2026**
(21) Application number: 21914306.2
(22) Date of filing: 27.12.2021
(51) Int. Cl.: G06F 16/9535, G06F 3/0484, G06F 16/9537, G01C 21/36, G01C 21/34

(54) **NAVIGATION METHOD, DEVICE, AND SYSTEM**
NAVIGATIONSVERFAHREN, -VORRICHTUNG UND -SYSTEM
PROCÉDÉ, DISPOSITIF ET SYSTÈME DE NAVIGATION

(30) Priority: 31.12.2020 CN 202011639275
(43) Date of publication of application: 18.10.2023
(73) Proprietor: Huawei Technologies Co., Ltd., Shenzhen, Guangdong 518129 (CN)
(72) Inventor: QI, Qi, Shenzhen, Guangdong 518129 (CN); HUANG, Lei, Shenzhen, Guangdong 518129 (CN)
(74) Representative: Epping - Hermann - Fischer
(86) International application number: PCT/CN2021/141816
(87) International publication number: WO 2022/143570

(56) References cited:
- EP-A1- 3 118 581
- CN-A- 102 102 993
- CN-A- 102 494 692
- CN-A- 102 538 794
- CN-A- 103 364 003
- CN-A- 112 860 987
- US-A1- 2002 161 512
- US-A1- 2007 156 331
- US-A1- 2009 030 598
- US-A1- 2009 157 297

## Description

This application claims priority to Chinese Patent Application No. 202011639275.1, filed with the China National Intellectual Property Administration on December 31, 2020 and entitled "NAVIGATION METHOD, APPARATUS, AND SYSTEM".

### TECHNICAL FIELD

This application relates to the field of navigation technologies, and in particular, to a navigation method, a computer system, a chip system, a computer-readable medium and a computer program product.

### BACKGROUND

Navigation has become a common choice for people's long-distance travel. Real-time traffic conditions can be learned through navigation, to avoid traffic congestion. A current navigation method includes: After receiving information about a destination entered by a user, a mobile phone provides a plurality of recommended locations associated with the destination on a map for the user to select; after receiving one of the recommended locations selected by the user, the mobile phone plans a plurality of navigation routes for the user to select; and after receiving one of the navigation routes selected by the user, the mobile phone starts navigation.

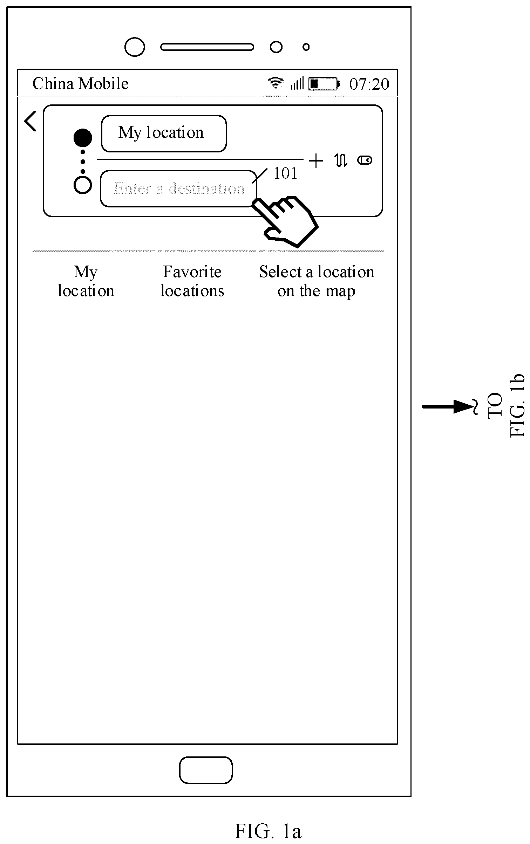

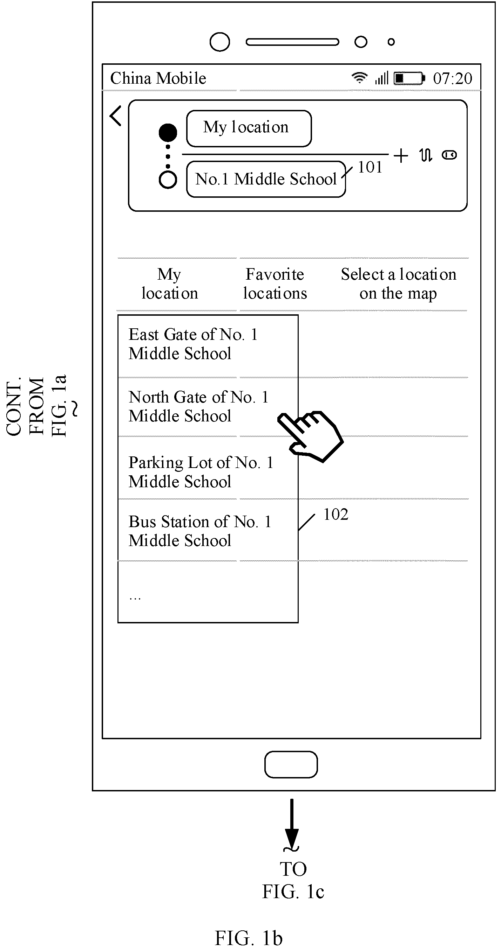

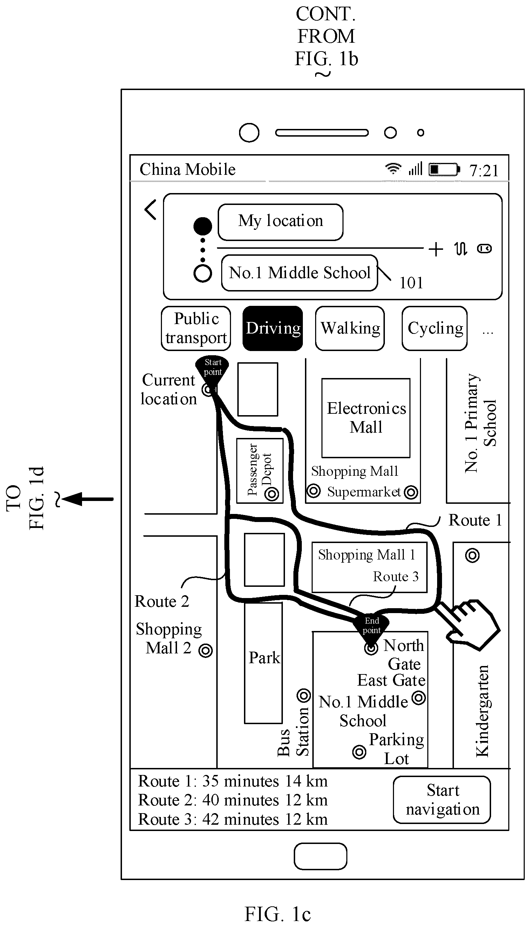

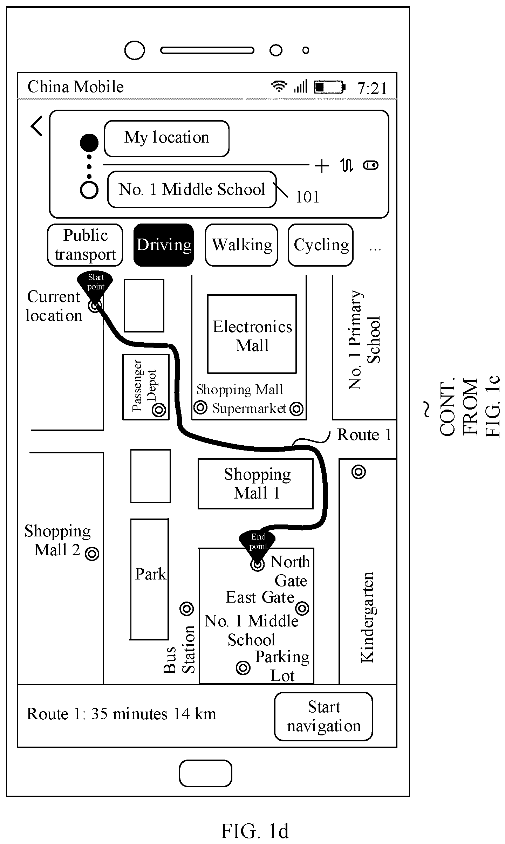

For example, when displaying an interface on a mobile phone screen as shown in FIG. 1a, the mobile phone receives destination information "No. 1 Middle School" entered by the user in an option box 101. Then, the mobile phone displays a plurality of recommended locations 102 related to "No. 1 Middle School" on the map, for example, an east gate of No. 1 Middle School, a north gate of No. 1 Middle School, a parking lot of No. 1 Middle School, and a bus station of No. 1 Middle School as shown in FIG. 1b, for the user to select. The user selects "North Gate of No. 1 Middle School" and indicates it to the mobile phone. After receiving the indication, the mobile phone plans routes 1 to 3 with a current location as a start point and the north gate of No. 1 Middle School as an end point, and displays the routes 1 to 3 on the mobile phone screen as shown in FIG. 1c, for the user to select. The user selects the route 1, and indicates it to the mobile phone. After receiving the indication, the mobile phone starts navigation based on the route 1. In this case, the mobile phone screen may display an interface shown in FIG. 1d.

When driving a vehicle, the user usually starts to depart after the navigation starts. In the foregoing navigation method, the user needs to interact with the mobile phone for at least three times (including: The user enters information about a destination, the user selects one recommended location, and the user selects one navigation route) before the navigation starts. Interactions are performed for a plurality of times, and therefore are time-consuming. This results in poor user experience.

US 2009/157297 A1 discloses a navigation system. The system prompts a user to input only information needed for determining a target region (e.g., a region including several tourist spots or a region including several ski resorts) at a departure time. The system prompts a user to input information needed for determining a specific destination (e.g., a specific tourist spot, or a specific ski resort) halfway through the target region.

US 2007/156331 A1discloses a navigation device, in order to allow a user to depart for his/her destination immediately, and to provide the user with guidance information in accordance with an appropriate route to the destination, the device comprises an area input section for the user to input a name of an area neighboring his/her destination, an arithmetic processing section, which searches for a route which leads the user to the area whose name is inputted in the area input section, and provides the user with guidance, in accordance with the route found by the search, so as to guide the user to the area whose name is inputted in the area input section. Also, the arithmetic processing section specifies, after the guidance to guide the user to the area has started, a destination by exchanging a dialogue with the user. Then, the arithmetic processing section selects a route which leads the user to the destination, and provides the user with guidance so as to guide the user to the destination.

EP 3 118 581 A1 discloses a vehicle operation device which is used in an autonomous vehicle autonomously controlled to drive along a determined driving route, and which includes: a destination setting unit configured to set a destination to a wide area for determining the driving route; a route setting unit configured to allot a provisional destination on the boundary of the area of the destination according to route search conditions including a current position and the destination, so as to determine the driving route passing through the provisional destination; and
a presenting unit configured to provide a user with a task indicated by an item operated by the user while the autonomous vehicle is moving along the driving route toward the provisional destination, so that the task is executed in the area of the destination after reaching the provisional destination.

### SUMMARY

Embodiments of this application provide a navigation method, computer system, a chip system, a computer-readable medium and a computer program product, to help reduce a quantity of human-machine interactions, reducing time occupied by navigation before departure, and improving user experience.

According to a first aspect, a navigation method is provided. The navigation method is applied to a navigation system and the method includes: receiving first input information, where the first input information indicates a first destination, and the first destination is a region; determining an initial navigation route in response to the first input information, and starting navigation based on the initial navigation route, where an end point of the initial navigation route is an initial navigation region, and the initial navigation region is a region determined based on the first destination; receiving second input information, where the second input information indicates a second destination, and the second destination is a location; determining a target navigation route in response to the second input information, where an end point of the target navigation route is the second destination; and continuing navigation based on the target navigation route, wherein the method further comprises: outputting prompt information, wherein the prompt information is for prompting a user to enter the second destination, wherein the outputting prompt information comprises: outputting the prompt information when it is determined that a vehicle is currently in a safe driving state, wherein the safe driving state meets the following condition: the vehicle in which the navigation system is located is currently in an autonomous driving mode.

In this technical solution, an initial point-to-region navigation route is first provided for a user, and navigation is started based on the initial navigation route. In this case, the user may depart instantly. Then, after the user departs, a precise point-to-point navigation route is provided for the user, so that navigation is performed based on the precise navigation route. Compared with a technical solution in a conventional technology in which the user may not be ready to depart before precise point-to-point navigation is directly performed, in this technical solution, an initial navigation route can be planned only after information about a region is confirmed in an initial phase of navigation, without repeatedly confirming a destination with the user, and the user is guided to depart. This helps reduce a quantity of human-machine interactions, reducing time occupied by navigation before departure, and improving user experience.

In a possible design, the first destination meets one or more of the following conditions: The navigation system searches out a plurality of locations on a map based on the first destination, and the plurality of locations are concentrated in a range; or the navigation system searches out a region on the map based on the first destination. This possible design provides a specific implementation of determining that the first destination is a region. Certainly, specific implementation is not limited thereto. For example, the first destination meets the following condition: The navigation system searches out a plurality of locations on the map. For another example, the first destination meets the following condition: An area occupied by the first destination is greater than or equal to a threshold.

In a possible design, the second destination meets the following condition: The navigation system searches out a location on the map of the navigation system based on the second destination. This possible design provides a specific implementation of determining that the second destination is a region. Certainly, specific implementation is not limited thereto. For example, the second destination meets the following condition: An area occupied by the second destination is less than a threshold.

In a possible design, the initial navigation region is a region including a part or all of recommended locations searched out by the navigation system on the map based on the first destination.

In a possible design, the initial navigation region is a region represented by the first destination.

In a possible design, the initial navigation region includes a region represented by the first destination.

In a possible design, the second destination is a location in the initial navigation region.

In a possible design, the second destination is a location outside the initial navigation region. Optionally, a distance between the second destination and the initial navigation region is less than a threshold, that is, the second destination is a location around the initial navigation region.

In a possible design, the second destination is a location whose distance from the first destination is less than a threshold. That is, the second destination is a location around the first destination.

In a possible design, the second destination is a location included in the first destination. That is, the second destination is a more precise destination than the first destination.

In a possible design, the second destination is a location searched out by the navigation system on the map based on the first destination.

In a possible design, a start point of the target navigation route is a current location of the navigation system.

In a possible design, the receiving second input information includes: receiving the second input information in a process of performing navigation based on the initial navigation route. For example, the second input information is received in the process of performing navigation based on the initial navigation route.

In a possible design, the outputting prompt information includes: outputting the prompt information in the process of performing navigation based on the initial navigation route. For example, the prompt information is output in the process of performing navigation based on the initial navigation route.

In a possible design, the prompt information is for prompting the user to enter the second destination. In this way, the user may directly enter the second destination into the navigation system. This helps improve flexibility of entering the second destination by the user.

In a possible design, the prompt information is for prompting the user with at least one location in the initial navigation region, and the at least one location is for determining the second destination. In this way, the user may select the second destination from the at least one location. This reduces operation steps of determining the navigation destination by the user, improving user experience. In a possible design, the method further includes: displaying the initial navigation region. Visualizing the initial navigation region helps the user learn of a range of the initial navigation region, improving user experience.

In a possible design, the method further includes: displaying the initial navigation route. Visualizing initial navigation route helps the user learn of the initial navigation route, improving user experience.

In a possible design, the determining an initial navigation route in response to the first input information includes: determining a first navigation route and a second navigation route in response to the first input information, where a planned end point of the first navigation route is a first location, a planned end point of the second navigation route is a second location, and the planned end points are locations in the initial navigation region or entrances of the initial navigation region; and determining the initial navigation route from the first navigation route and the second navigation route. In other words, this embodiment of this application supports a technical solution in which a plurality of point-to-region navigation routes are first determined in the initial phase of navigation, and the initial navigation route is determined from the plurality of point-to-region navigation routes. In this way, more choices can be provided for the user, improving user experience.

In a possible design, the first location is different from the second location. In other words, in this embodiment of this application, planned end points of different point-to-region navigation routes may be different. This helps improve flexibility of setting a point-to-region navigation route, so that the navigation system enables navigation more quickly, and the user can depart instantly.

According to a second aspect, a computer system is provided. The computer system is configured to perform the method according to any one of the first aspect and the possible designs of the first aspect.

In a possible design, in this application, functional module division may be performed on the computer system according to the method provided in the first aspect. For example, each functional module may be obtained through division based on a corresponding function, or two or more functions may be integrated into one processing module. For example, in this application, the computer system may be divided into an input unit, a determining unit, a navigation unit, and the like based on functions. For descriptions of possible technical solutions performed by the foregoing functional modules obtained through division and beneficial effects, refer to the technical solutions provided in the first aspect or corresponding possible designs of the first aspect. Details are not described herein again.

In another possible design, the computer system includes a memory and a processor. The memory is configured to store computer instructions. The processor is configured to invoke the computer instructions, to perform any navigation method provided in the first aspect and any possible design of the first aspect.

It should be noted that, during physical implementation, a part or all of the functional modules/components of the computer system may be located in a same device, or may be located in a plurality of devices. A physical form of the device is not limited in this embodiment of this application.

Optionally, the computer system may be the navigation system in the first aspect.

According to a third aspect, a chip system is provided. The chip system is used in a navigation system. The chip system includes an interface circuit and a processor. The interface circuit and the processor are connected to each other through a line. The processor receives computer instructions from a memory of the navigation system through the interface circuit, and executes the computer instructions, to enable the processor to implement any navigation method provided in the first aspect and any possible design of the first aspect.

According to a fourth aspect, a computer-readable storage medium is provided, for example, a non-transient computer-readable storage medium. The storage medium stores a computer program (or instructions). When the computer program (or the instructions) is executed on a computer device, the computer device is enabled to perform the steps performed by the navigation system in any method provided in any possible implementation of the first aspect.

According to a fifth aspect, a computer program product is provided. When the computer program product runs on a computer device, the computer device is enabled to perform the steps performed by the navigation system in any method provided in any possible implementation of the first aspect. It may be understood that any one of the foregoing computer system, chip system, computer storage medium, or computer program product may be used for the corresponding method provided above. Therefore, for beneficial effects that can be achieved by the computer system, the chip system, the computer storage medium, or the computer program product, refer to beneficial effects of the corresponding method. Details are not described herein again.

In this application, a name of the navigation system does not constitute a limitation on names of devices or functional modules. During actual implementation, these devices or functional modules may have other names.

These aspects or other aspects in this application are more concise and comprehensible in the following descriptions.

### BRIEF DESCRIPTION OF DRAWINGS

FIG. 1a to FIG. 1d are a schematic diagram of a process of a navigation method according to a conventional technology;
FIG. 2A is a schematic diagram of a human-machine interaction scenario to which an embodiment of this application is applicable;
FIG. 2B is a schematic diagram of a structure of a navigation system according to an embodiment of this application;
FIG. 3 is a schematic flowchart of a navigation method according to an embodiment of this application;
FIG. 4 is a schematic diagram of a user interface for receiving first input information by a navigation system according to an embodiment of this application;
FIG. 5 is a schematic diagram of an example of a relationship between a location and a recommended location according to an embodiment of this application;
FIG. 6 is a schematic diagram of an example of a relationship between a region and a recommended location according to an embodiment of this application;
FIG. 7 is a schematic diagram of a navigation interface displayed in a navigation enabling process according to an embodiment of this application;
FIG. 8 is a schematic diagram of a navigation interface of instant navigation upon one interaction according to an embodiment of this application;
FIG. 9A-a and FIG. 9A-b are a schematic diagram of a process of a method for obtaining a recommended location according to an embodiment of this application;
FIG. 9B-a to FIG. 9B-d are a schematic diagram of a process of another method for obtaining a recommended location according to an embodiment of this application;

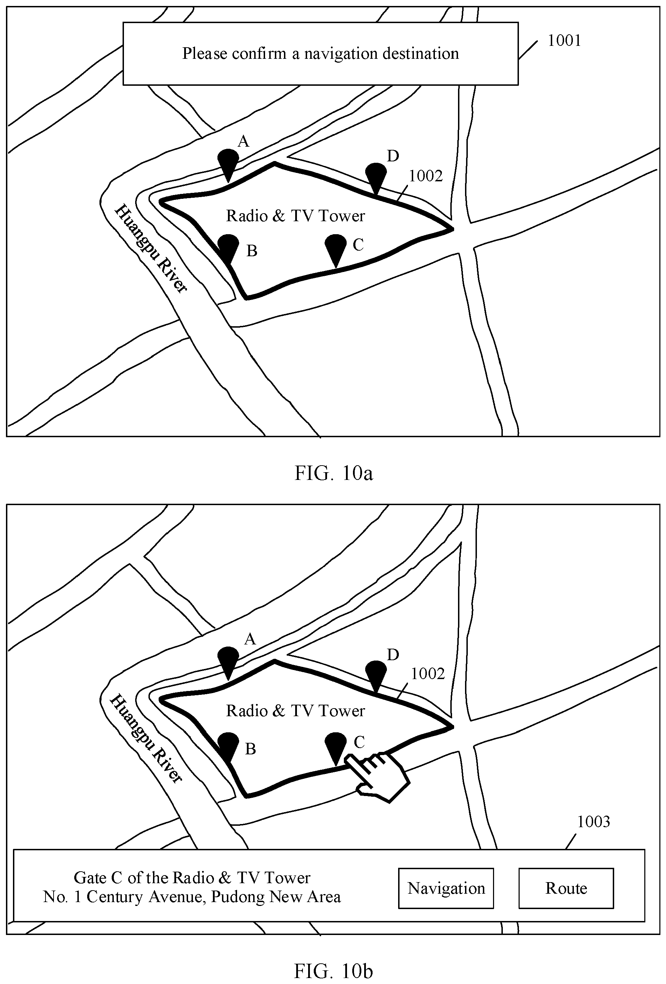

FIG. 10a to FIG. 10b are a schematic diagram of a process of confirming a navigation destination according to an embodiment of this application;

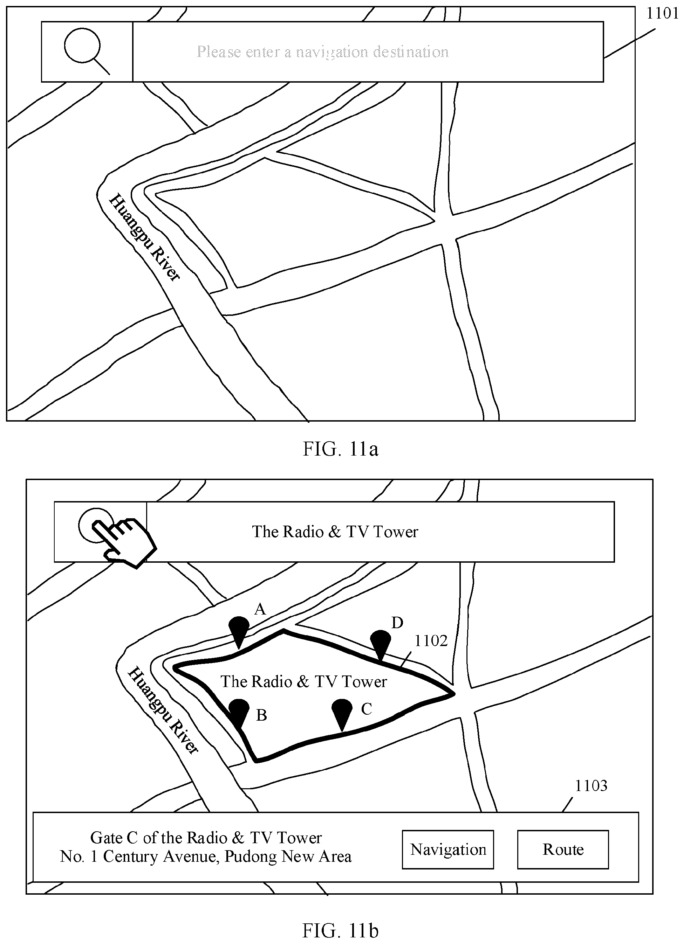

FIG. 11a to FIG. 11c are a schematic diagram of another process of conforming a navigation destination according to an embodiment of this application;

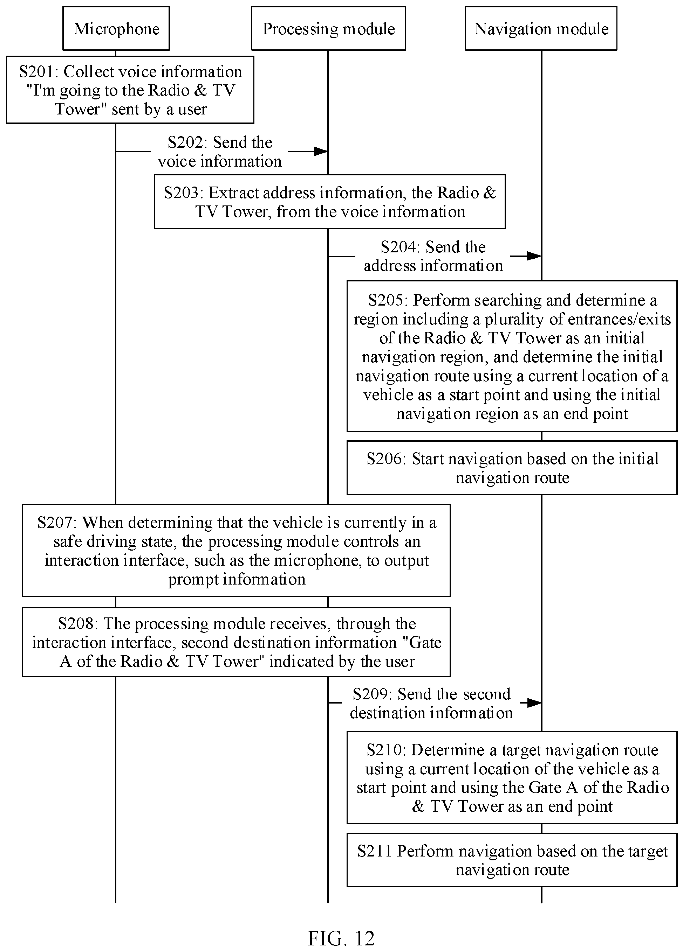

FIG. 12 is a schematic flowchart of another navigation method according to an embodiment of this application;

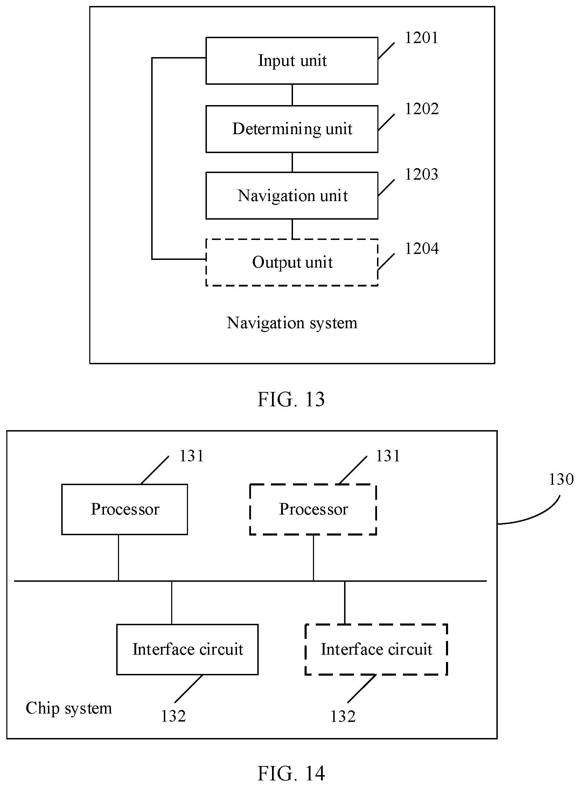

FIG. 13 is a schematic diagram of a structure of another navigation system according to an embodiment of this application;
FIG. 14 is a schematic diagram of a structure of a chip system according to an embodiment of this application; and

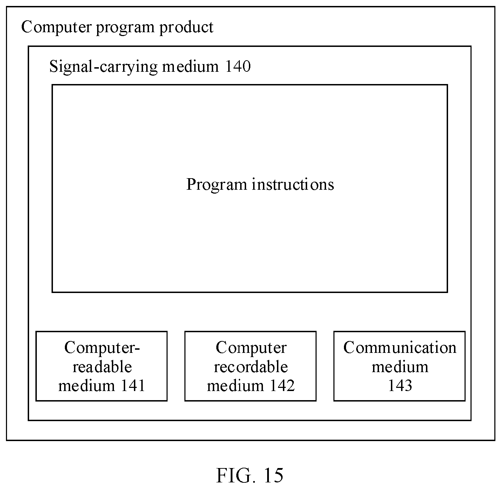

FIG. 15 is a conceptual partial view of a computer program product according to an embodiment of this application.

### DESCRIPTION OF EMBODIMENTS

In embodiments of this application, the word "example", "for example", or the like is used to represent giving an example, an illustration, or a description. Any embodiment or design scheme described as an "example" or with "for example" in embodiments of this application should not be explained as being more preferred or having more advantages than another embodiment or design scheme. Exactly, use of the word "example", "for example", or the like is intended to present a related concept in a specific manner.

Terms "first" and "second" in embodiments of this application are merely intended for a purpose of description, and shall not be understood as an indication or implication of relative importance or implicit indication of a quantity of indicated technical features. Therefore, a feature restricted by "first " or "second" may explicitly indicate or implicitly include one or more such features. In the descriptions of embodiments of this application, "a plurality of" means two or more than two unless otherwise specified.

Embodiments of this application provide a navigation method. The method may be applied to a scenario in which a navigation system provides a navigation service for a user. Specifically, the navigation system first provides the user with an initial point-to-region navigation route (that is, a coarse-grained navigation route or a rough navigation route), starts navigation, and then provides the user with a precise point-to-point navigation route. Compared with the conventional technology, in this technical solution, navigation starts more quickly, reducing a quantity of human-machine interactions and time consumed before the navigation is started, and improving user experience.

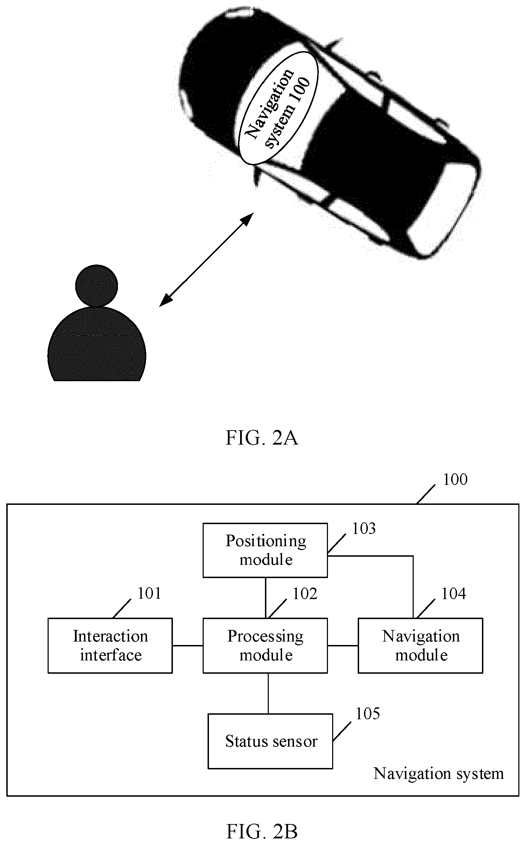

Embodiments of this application may be applied to a human-machine interaction scenario shown in FIG. 2A. The scenario may be considered as a scenario in which a person interacts with a navigation system 100. A device form of a physical device carrying the navigation system 100 is not limited in embodiments of this application.

In an implementation, the navigation system 100 may be disposed in a terminal. For example, the terminal may include at least one of the following: an in-vehicle device (such as an in-vehicle navigator), a mobile phone, a tablet computer, a desktop, laptop, or handheld computer, a notebook computer, an ultra-mobile personal computer (UMPC), a netbook, a cellular phone, a personal digital assistant (PDA), an augmented reality (AR) device/a virtual reality (VR) device, or another device with a positioning function.

In another implementation, a part of functions of the navigation system 100 may be implemented by using the terminal, and a remaining function may be implemented by using a network device.

For example, a human-machine interaction function of the navigation system 100 may be implemented by using the terminal, and a navigation function may be jointly implemented by using the terminal and the network device.

FIG. 2B is a schematic diagram of a structure of the navigation system 100 according to an embodiment of this application. Refer to FIG. 2B. The navigation system 100 may be divided into a plurality of modules based on functions, for example, an interaction interface 101, a processing module 102, a positioning module 103, a navigation module 104, and a status sensor 105. Details are as follows:
The interaction interface 101 is an interface for interaction between a user and the navigation system 100. The navigation system 100 may receive input information of the user through the interaction interface 101, or may send prompt information to the user through the interaction interface 101.

In hardware implementation, the interaction interface 101 may be deployed on the terminal. The interaction interface 101 may be specifically a display and/or an audio input/output device (such as a microphone or a speaker), or the like. For example, a microphone is usually disposed on a vehicle, and voice information of the user is received through the microphone. In this case, the microphone serves as the interaction interface 101. For another example, the user enters text information on a display, to implement text-based human-machine interaction, so that the user confirms a final destination. In this case, the display serves as the interaction interface 101. For another example, the navigation system 100 sends voice prompt information through a speaker to prompt the user to enter a final destination. In this case, the speaker serves as the interaction interface 101.

The processing module 102 is a nerve center and a command center of the navigation system 100, and is configured to control other components to cooperate with each other, to implement the navigation method provided in embodiments of this application. For example, the processing module 102 may parse input information (for example, voice information or text information) of the user, extract location information from the input information with reference to technologies such as voice recognition, text recognition, and word segmentation, and determine the location information as a region, a location, or the like. In addition, when the location information is determined as a region, the navigation method provided in embodiments of this application is performed. When the location information is determined as a location, the navigation method provided in the conventional technology (for example, the navigation method shown in FIG. 1a to FIG. 1d) is performed. For another example, the processing module 102 may further control interaction between the interaction interface 101 and the user via instructions, so that the navigation system 100 actively interacts with the user to confirm the navigation destination.

In hardware implementation, the processing module 102 may be deployed on the terminal. The processing module 102 may include an application processor (AP), a modem processor, a graphics processing unit (GPU), an image signal processor (ISP), a controller, a video codec, a digital signal processor (DSP), and a baseband processor, a neural-network processing unit (NPU), and/or the like. The controller may generate an operation control signal based on instruction operation code and a time sequence signal, to complete control of instruction fetching and instruction execution. In addition, a memory may be further disposed in the processing module 102, to store instructions and data. In some embodiments, the memory in the processing module 102 is a cache. The memory may store instructions or data that is just used or cyclically used by the processing module 102. If the processing module 102 needs to use the instructions or the data again, the processing module 102 may directly invoke the instructions or the data from the memory. This avoids repeated access, reduces waiting time of the processing module 102, and improves system efficiency.

The positioning module 103 is configured to receive a satellite positioning signal, to determine a real-time location of the vehicle. In hardware implementation, the positioning module 103 may include a global positioning system (GPS) module.

The navigation module 104 obtains location information of the vehicle from the positioning module 103, and performs route planning. In hardware implementation, for example, a part of the navigation module 104 may be deployed on the terminal, and another part may be deployed on the network device. For example, the terminal sends the location information of the vehicle to the network device, and the network device performs route planning, and returns a route planning result to the terminal. For example, the navigation module 104 may be deployed only on the terminal, that is, the terminal performs the step of route planning. For example, functions of the navigation module 104 deployed on the terminal may be integrated into the processing module 102. Certainly, the functions may alternatively be implemented by a component (for example, a chip) independent of the processing module 102.

The status sensor 105 is configured to: collect various parameters of the vehicle, and send the collected parameters to the processing module 102, so that the processing module 102 can sense a driving status and the like of the vehicle. In hardware implementation, the status sensor 105 may be deployed on the terminal. For example, the status sensor 105 may include a speed sensor, an acceleration sensor, and the like. For example, a speed of the vehicle is collected by the speed sensor, and an acceleration of the vehicle is collected by the acceleration sensor. Subsequently, the processing module 102 may determine whether the vehicle is in a fast driving state or a slow driving state based on the speed and/or the acceleration of the vehicle, and send the prompt information through the interaction interface 101 when the vehicle is in the slow driving state, to prompt the user to confirm the navigation destination.

All methods in the following embodiments may be implemented by the navigation system 100. The following describes the method in embodiments of this application with reference to the accompanying drawings.

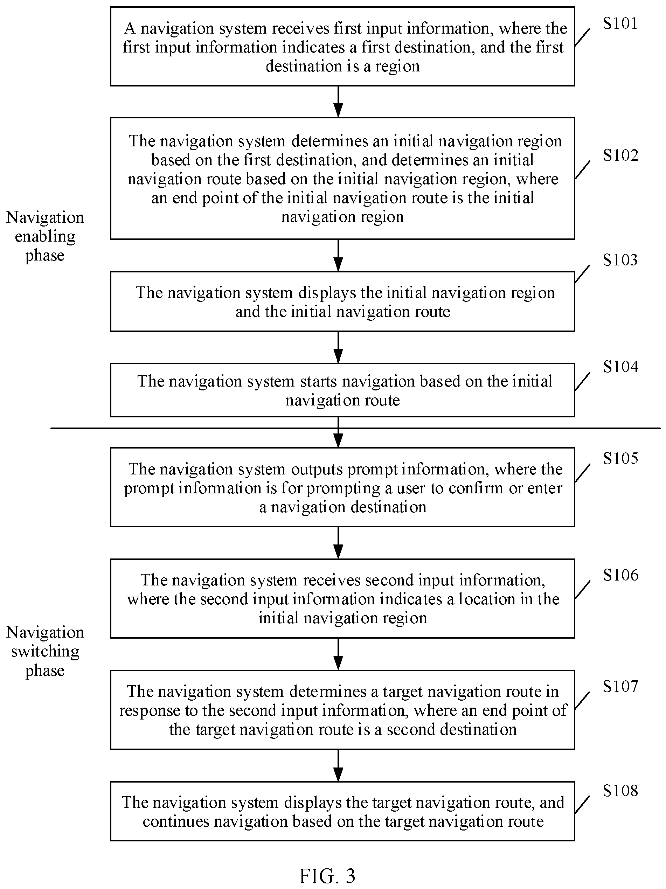

FIG. 3 is a schematic flowchart of a navigation method according to an embodiment of this application. The method includes the following steps.

S101: A navigation system receives first input information, where the first input information indicates a first destination. The first destination is a region.

Specific content of the first input information is not limited in this embodiment of this application. For example, the first input information may be the first destination, for example, the "Radio & TV Tower". For another example, the first input information may be information including the first destination, for example, "I am going to the Radio & TV Tower".

A manner for entering the first input information is not limited in this embodiment of this application. For example, the first input information may be entered in a manner of text, voice, or a combination thereof.

An implementation process in which" A navigation system receives first input information" is not limited in this embodiment of this application.

In an implementation, the navigation system may receive the first input information by using a "voice assistant". In this case, the first input information may be a voice instruction.

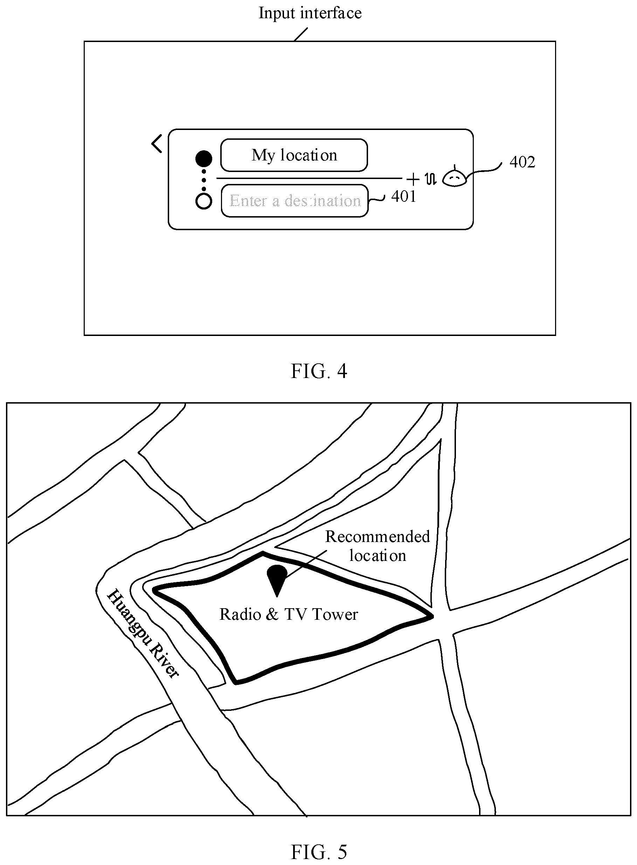

In another implementation, the navigation system may start a navigation application or another application that has a navigation function, and display an input interface, as shown in FIG. 4. Then, the first input information is received based on the input interface.

For example, the user may input the first input information in the manner of text at a specific location of the input interface. For example, the user enters the "Radio & TV Tower" in an input box 401 in FIG. 4.

For another example, the user may trigger the manner of voice input on the input interface, to input the first input information by using a voice instruction. For example, the user may tap a voice key 402 in FIG. 4 to trigger the manner of voice input, and send a voice instruction "Radio & TV Tower", "I am going to the Radio & TV Tower", or the like.

Optionally, after receiving the first input information, the navigation system may extract address information in the first input information by using one or more of technologies such as text recognition, voice recognition, and word segmentation, and determine an address indicated by the address information as the first destination.

For example, the navigation system recognizes the first input information "Radio & TV Tower" or "I am going to the Radio & TV Tower", extracts the address information "Radio & TV Tower", and uses the "Radio & TV Tower" as the first destination.

It should be noted that, for clear descriptions of the technical solutions provided in embodiments of this application, a destination is divided into a "location" and a region" in the technical solutions provided in embodiments of this application. "Location" and "region" are relative concepts.

### 1. Location

If the navigation system searches out a location (which may also be referred to as a recommended location) on the map based on a destination, the destination is a location. For example, the "Radio & TV Tower" is a building. It is assumed that the "Radio & TV Tower" has only one entrance/exit. When the navigation system searches the map for the "Radio & TV Tower", only one recommended location is matched, as shown in FIG. 5. In this case, the "Radio & TV Tower" is a location.

### 2. Region

In an implementation, if the navigation system searches out a plurality of locations on the map based on a destination, and the plurality of locations are concentrated in a range, the destination is a region.

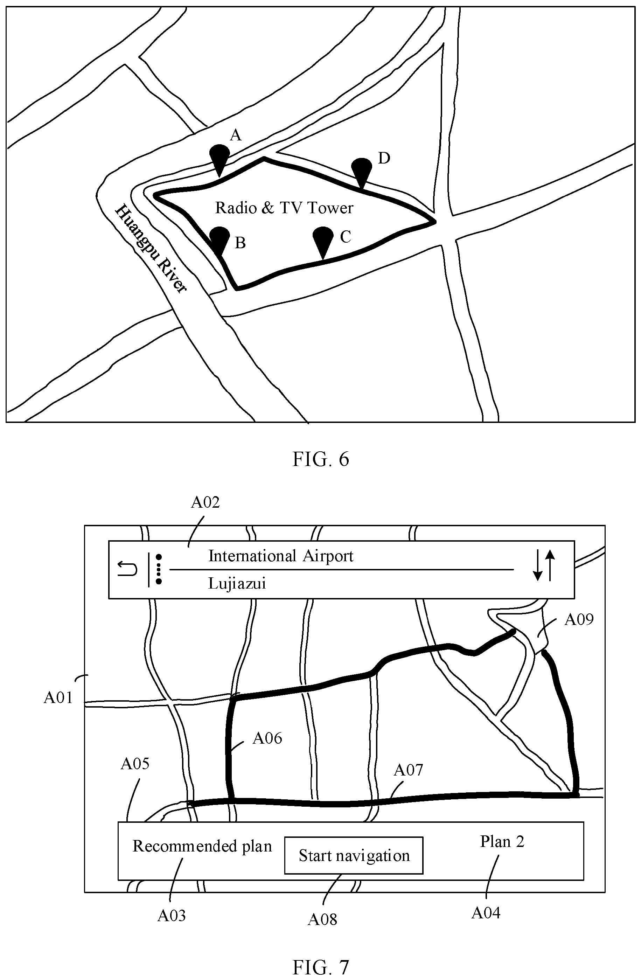

For example, as shown in FIG. 6, the "Radio & TV Tower" actually occupies a large area, and has a plurality of entrances/exits (gates A, B, C, and the like). In addition, different entrances/exits are far away from each other and are in different streets. Routes for navigating to different entrances/exits are different. Therefore, when searching for the "Radio & TV Tower" on the map, the navigation system marks a region covered by the entire Radio & TV Tower. All of the entrances/exits are used as recommended locations, for example, A, B, C, and D in FIG. 6. In this case, the Radio & TV Tower is a region.

In this possible implementation, when a plurality of recommended locations searched out by the navigation system on the map based on a destination are concentrated, it is considered that the destination is a region. This is mainly to exclude a scenario in which the plurality of recommended locations are scattered. For example, when searching the map for a "Cafe", the navigation system matches a plurality of scattered locations. In this case, the "Cafe" is not a region" described in this embodiment of this application.

In another implementation, if the navigation system searches out a region on the map based on a destination, the destination is a region.

For example, as shown in FIG. 6, when searching for the "Radio & TV Tower", the navigation system marks a region covered by the entire Radio & TV Tower, that is, finds a region. In this case, the Radio & TV Tower is a region.

For another example, Lujiazui is a well-known region in Shanghai. The navigation system searches the map for "Lujiazui", but cannot match a specific location. Therefore, the navigation system marks the entire region covered by Lujiazui, that is, finds a region. In this case, Lujiazui is a region. It should be noted that a "destination" in the foregoing descriptions of the "location" and the region" may be a first destination or a second destination in embodiments of this application.

It should be additionally noted that the foregoing descriptions of the "location" and the region" are merely some examples. During specific implementation, whether a destination is a location, a region, or the like may be alternatively determined in another manner. Several possible embodiments are listed below.

In some embodiments, the navigation system may determine whether a destination is a location or a region based on a quantity of recommended locations searched out on the map based on the destination. For example, if the navigation system searches out one recommended location on the map based on a destination, the navigation system determines that the destination is a location. If the navigation system searches out a plurality of recommended locations on the map based on a destination, the navigation system determines that the destination is a region.

In some other embodiments, the navigation system may determine whether a destination is a location or a region based on an area occupied by the destination. For example, if the navigation system determines that an area occupied by a destination is less than a threshold, the navigation system determines that the destination is a location. If the navigation system determines that an area occupied by a destination is greater than or equal to the threshold, the navigation system determines that the destination is a region.

It should be additionally noted that a "destination" in the foregoing descriptions of the "location" and the region" may be a first destination or a second destination in embodiments of this application.

Optionally, if the navigation system obtains the first destination and determines that the first destination is a region, the following S102 is then performed. If the navigation system obtains the first destination and determines that the first destination is a location, a precise navigation route may be planned directly performed based on the first destination, for example, a navigation solution in the conventional technology is executed.

S102: The navigation system determines an initial navigation region based on the first destination, and determines an initial navigation route based on the initial navigation region. An end point of the initial navigation route is the initial navigation region.

The initial navigation region is a region determined based on the first destination. What is relative to the initial navigation region is a navigation destination (that is, the precise navigation destination, a navigation end point, or a second destination). Compared with the initial navigation region, the navigation destination is a specific and definite location.

The following describes several specific implementations of determining the initial navigation region provided in this embodiment of this application.

Manner 1: The initial navigation region is a region including a part or all of recommended locations associated with the first destination.

A recommended location associated with the first destination may be a location that is searched out in the navigation region based on the first destination and that is on the map.

Optionally, the recommended location associated with the first destination may include a more specific location for the first destination. For example, if the first destination is the Radio & TV Tower, the recommended location associated with the first destination may include each entrance/exit of the Radio & TV Tower. For another example, if the first destination is No. 1 Middle School, the recommended location associated with the first destination may include each entrance/exit of No. 1 Middle School, a teaching building of No. 1 Middle School, or the like.

Optionally, the recommended location associated with the first destination may include a location in a preset range of the first destination, for example, a preset range with the first destination at the center. For example, if the first destination is a subway station, the recommended location associated with the first destination includes a gas station, a convenience store, or the like around the subway station. For another example, with reference to FIG. 1a to FIG. 1d, if the first destination is No. 1 Middle School, the recommended location associated with the first destination includes an east gate and a north gate of No. 1 Middle School, a parking lot of No. 1 Middle School, a bus station of No. 1 Middle School, or the like.

That a recommended location associated with a first destination is specifically a location or locations in a preset range of the first destination may be predefined, or may be obtained through learning based on a user habit. This is not limited in this embodiment of this application.

Certainly, the recommended location associated with the first destination may further include a location determined in another manner, for example, with reference to the conventional technology. This is not limited in this embodiment of this application.

In Manner 1, a location relationship between the initial navigation region and a region represented by the first destination is not limited, that is, the initial navigation region and the region represented by the first destination may partially or completely overlap, or may not overlap.

Manner 2: The initial navigation region includes a region represented by the first destination.

For example, if the first destination is a building, the initial navigation region may be a street in which the building is located, a district in which the building is located, a city in which the building is located, or the like. A specific initial navigation region may be related to a start point of the initial navigation route, where the start point of the initial navigation route is not in the initial navigation region. For example, if the start point of the initial navigation route is not the street in which the building is located, the initial navigation region may be the street in which the building is located.

For another example, if the first destination is the Radio & TV Tower, the initial navigation region may include a region larger than the entire coverage of the Radio & TV Tower.

Manner 3: The initial navigation region is a region represented by the first destination, that is, the initial navigation region is the same as the region represented by the first destination.

For example, if the first destination is the "Radio & TV Tower", the navigation system may use the region covered by the Radio & TV Tower as the initial navigation region. Similarly, if the first destination is "Lujiazui", the navigation system may use a region covered by the entire Lujiazui as the initial navigation region. If the first destination is a city (or a district in a city), the navigation system may use a region covered by the city (or the district) as the initial navigation region. If the first destination is "No. 1 Middle School", the navigation system may use a region covered by No. 1 Middle School as the initial navigation region.

In a specific implementation process, that the navigation system determines the initial navigation region in one of the foregoing manners may be predefined, or may be configured by the user. This is not limited in this embodiment of this application.

The initial navigation route is a point-to-region navigation route, and is specifically a navigation route from a start point of the initial navigation route to the initial navigation region.

In some embodiments, when the start point of the initial navigation route is determined, a route determined by using any place in the initial navigation region as an end point may be used as the initial navigation route.

Optionally, the point-to-region navigation route may be a navigation route from the point to any preset location in the region. For example, the preset location may be any intersection (or a preset intersection) that enters the region, a landmark location (for example, a famous scenic spot, a famous building, a railway station, a high-speed railway station, or an airport) in the region, a location (for example, some locations that the user frequently visits) in the region that is learned based on the user habit, or the like.

In some other embodiments, the navigation system may directly use the initial navigation region as the end point to plan a route, to obtain the initial navigation route. In this case, any route that can reach the initial navigation region may be used as the initial navigation route. Compared with a precise navigation route (that is, a route from the start point to the second destination), the initial navigation route is a planned rough navigation route or a planned coarse-grained navigation route. In some embodiments, the start point of the initial navigation route may be a current location of the navigation system at which S102 is performed. The current location of the navigation system may be entered by the user to the navigation system, may be obtained by the navigation system by positioning the navigation system, or certainly may be obtained in another manner. This is not limited in this embodiment of this application.

In some other embodiments, the start point of the initial navigation route may be address information entered by the user, and an address indicated by the address information may not be the current location of the navigation system at which the navigation system performs S102. For example, the current location of the navigation system is an address A, and the user may enter a start point "address B" and a first destination "address C" on a display of the navigation system.

Optionally, S 102 may include the following S 102A and S102B.

S 102A: The navigation system determines the initial navigation region in response to the first input information, and determines a plurality of navigation routes based on the initial navigation region. A planned end point of each of the plurality of navigation routes is the initial navigation region, that is, the plurality of navigation routes are all point-to-region navigation routes. Planned end points of any two of the plurality of navigation routes may be the same or may be different.

For example, the plurality of navigation routes include a first navigation route and a second navigation route. A planned end point of the first navigation route is a first location, and a planned end point of the second navigation route is a second location. The planned end point is a location in the initial navigation region (for example, any location or a preset location in the initial navigation region) or an entrance of the initial navigation region. The first location and the second location may be the same, or may be different. For example, with reference to FIG. 7, the initial navigation region is A09, and the first navigation route and the second navigation route may be A06 and A07 respectively.

It should be noted that the end points of the first navigation route and the second navigation route both are the initial navigation region. To implement navigation to the initial navigation region, two or more different locations are set as planned end points, to determine different navigation routes to a same region. This provides more choices for the user, improving user experience.

Optionally, in a process of determining the plurality of navigation routes, the navigation system may further refer to information such as a current road condition.

S102B: The navigation system determines the initial navigation route from the plurality of navigation routes.

For example, the navigation system may autonomously determine the initial navigation route from the plurality of navigation routes, for example, use a route with a shortest distance or a route with the best road condition among the plurality of navigation routes as the initial navigation route.

For another example, the navigation system may display the plurality of navigation routes, and receive third input information (for example, receive the third input information through a touch operation, a voice operation, or the like), where the third input information indicates the initial navigation route. Certainly, during specific implementation, a technical solution in which navigation system autonomously determines an initial navigation route from a plurality of navigation routes may be selected to reduce a quantity of human-machine interactions.

S103: The navigation system displays the initial navigation region and the initial navigation route. Displaying the initial navigation region and the initial navigation route is an optional step. Visualizing the initial navigation region helps the user learn of a range of the initial navigation region, improving user experience. Visualizing the initial navigation route helps the user learn of the initial navigation route, improving user experience.

S104: The navigation system starts navigation based on the initial navigation route.

"Start navigation" herein means starting navigation for the first time in the current navigation process, or is understood as enabling navigation. After determining the initial navigation region, that is, after determining a rough destination, the navigation system may plan a route and enable navigation based on the planned navigation route, instead of enabling navigation when a precise navigation route is determined. This helps reduce a quantity of human-machine interactions, and time consumed before the navigation is enabled, improving user experience.

For example, if the user needs to travel from the International Airport to Lujiazui, the plurality of navigation routes determined by the navigation system may be shown in FIG. 7. A01 represents a user interface (or a navigation interface or a map interface), and displays map information, a departure point (that is, a start point of a navigation route), a destination (that is, an end point of the navigation route), and the navigation route from the departure point to the destination. A02 represents journey information. Specifically, the departure point (that is, the start point) and the destination are displayed in a manner of text. The departure point and the destination can be entered. Tap or double-tap to enter an input interface and enter the departure point or destination. A dialog box A05 contains A03, A04, and A08. A03 and A04 are text representations of planned (or recommended) navigation routes, and respectively correspond to different planned routes A06 and A07. When the user taps A03, it indicates that the initial navigation route selected by the user is A06. In this case, the navigation system may highlight A06 and blur A07. When the user taps A04, it indicates that the initial navigation route selected by the user is A07. In this case, the navigation system may highlight A07 and blur A06. A09 is the initial navigation region. The user may tap A08 to start navigation. In response to the tap operation, the navigation system may perform navigation according to a navigation route selected by the user.

Certainly, the navigation system may automatically enable navigation when determining an initial navigation route, to further reduce a quantity of human-machine interactions before departure, reducing time consumed for route planning before departure.

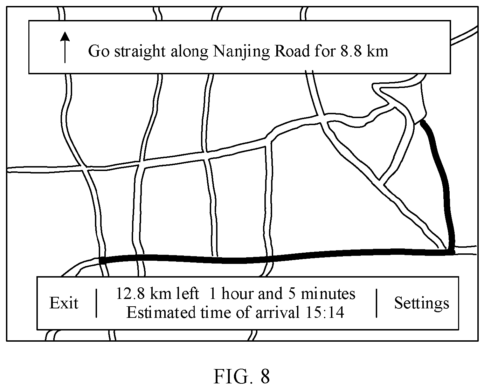

Optionally, the navigation system may not display a route planning interface shown in FIG. 7, to further reduce a quantity of human-machine interactions before departure. Instead, the navigation system directly selects a route with the best road condition for navigation. For example, the navigation system directly enters a navigation interface shown in FIG. 8. That is, after the user sends voice information, the navigation system presents the navigation interface shown in FIG. 8, and directly performs navigation for the user. In this way, instant navigation is enabled upon one interaction before departure. This helps improve user experience. In this process, processes such as determining of the initial navigation region and route planning are automatically completed by the navigation system in the background.

Optionally, on the navigation interface, the navigation system may switch to a conventional navigation mode, for example, a navigation mode shown in FIG. 1a to FIG. 1d. For example, based on FIG. 7, the user may directly enter a final destination in the destination bar in A02, and then the navigation system determines the navigation destination through one or more human-machine interactions, to plan a navigation route from the current start point to the navigation destination. In other words, this embodiment of this application supports a technical solution of switching between the navigation mode provided in this embodiment of this application and the conventional navigation mode.

S105: The navigation system outputs prompt information. The prompt information is for prompting the user to confirm or enter a navigation destination.

Because the initial navigation route is a rough navigation route, the prompt information is for prompting the user to confirm the navigation destination or enter the second destination, to provide a precise navigation route (that is, a navigation route to a location that the user expects to reach) for the user.

According to the invention, the navigation system outputs the prompt information when determining that a vehicle is currently in a safe driving state.

It may be understood that, in a driving process, the vehicle may encounter road conditions such as a red light or congestion. The vehicle keeps in a low speed state for a long period of time, or directly stops moving forward, or the vehicle enters an autonomous driving mode. In this case, the vehicle is in the safe driving state, and a driver has time to handle another matter. Therefore, when the vehicle is in the safe driving state, the navigation system actively outputs the prompt information, to prompt the user to confirm the navigation destination. This helps improve time management efficiency of the user.

Certainly, the safe driving state may further include another state. In an example, that the vehicle is currently in the safe driving state may be understood as that the driver is in an idle state.

A specific implementation in which the navigation system determines that the vehicle is currently in the safe driving state is not limited in this embodiment of this application.

Optionally, the navigation system collects a driving speed, duration, and the like of the vehicle by using a status sensor such as a speed sensor or an acceleration sensor; determines a driving status of the vehicle based on the collected parameters; and determines, based on the current driving status of the vehicle, whether the vehicle is currently in the safe driving state. For example, the driving status of the vehicle may include a fast driving state, a slow driving state, a stopped state, and the like. The "fast" and the "slow" herein are relative concepts. When the driving speed of the vehicle is greater than a threshold, it is determined that the vehicle is in the fast driving state. When the driving speed of the vehicle is less than the threshold and is greater than 0, it is determined that the vehicle is in the slow driving state. The threshold may be determined based on experience. When the driving speed of the vehicle is equal to 0, it is determined that the vehicle is in the stopped state. When the vehicle is in the slow driving state and the stopped state, it is considered that the vehicle is in the safe driving state.

According to the invention, when determining that the vehicle in which the navigation system is located is currently in the autonomous driving mode, the navigation system determines that the vehicle is currently in the safe driving state. It may be understood that, when the vehicle is in the autonomous driving mode, road conditions are usually good. In this case, it is considered that the vehicle is currently in the safe driving state.

In some other embodiments, the navigation system may output the prompt information when determining that a distance between the vehicle and the initial navigation region is less than or equal to a threshold. The threshold may be determined based on factors such as a vehicle speed and experience.

The distance between the vehicle and the initial navigation region may be measured based on a distance between the vehicle and a location in the initial navigation region. For example, the location may be a central location of the initial navigation region, or "an intersection point between the initial navigation route and the initial navigation region". Certainly, the location may alternatively be another specific location. This is not limited in this embodiment of this application. Optionally, the navigation system outputs the prompt information in the process of performing navigation based on the initial navigation route.

For example, the navigation system may start a thread to start the navigation based on the initial navigation route. In addition, when the thread is running, the navigation system starts another thread to output the prompt information, so as to continue navigation. The process may be considered as a specific implementation in which the navigation system outputs the prompt information in the process of performing navigation based on the initial navigation route, but does not constitute a limitation on "the navigation system outputs the prompt information in the process of performing navigation based on the initial navigation route".

Certainly, in another example, the navigation system may start a thread to start navigation based on the initial navigation route; and when a trigger condition for outputting the prompt information is met currently, terminate the process and start another process to output the prompt information, so as to continue navigation. When terminating the process, the navigation system may or may not exit a current navigation interface.

It should be noted that, in the conventional technology, if a destination needs to be changed, a navigation system usually first terminates a current navigation process, and then starts a next navigation process.

S105 in which the navigation system actively prompts the user to confirm the navigation destination is performed. This helps the user adjust the navigation route in time, to avoid a navigation error caused because the user does not confirm the navigation route in time, improving user experience.

S106: The navigation system receives second input information. The second input information indicates the second destination. The second destination is a location. The second destination is a precise navigation location, that is, a location that the user expects to reach.

The following describes specific implementations of the second destination.

Implementation A: The second destination is a location in the initial navigation region. That is, the second destination is a more precise destination than the initial navigation region.

For example, if the initial navigation region is the region in which the Radio & TV Tower is located, the second destination may be an entrance/exit of the Radio & TV Tower.

Implementation B: The second destination is a location outside the initial navigation region. Optionally, a distance between the second destination and the initial navigation region is less than a threshold, that is, the second destination is a location around the initial navigation region.

A distance from a location to a region may be a distance from the location to a specific location (for example, a center point, a location of a landmark building, or an intersection in the region closest to the location) in the region. A specific value of the threshold is not limited in this embodiment of this application.

For example, if the initial navigation region is the region in which the Radio & TV Tower is located, the second destination may be a location close to the region in which the Radio & TV Tower is located.

Implementation C: The second destination is a location whose distance from the first destination is less than a threshold. That is, the second destination is a location around the first destination.

For example, if the user expects to visit a location near the Radio & TV Tower, the first input information may be the Radio & TV Tower, and the second destination may be the specific location. Implementation D: The second destination is a location included in the first destination. That is, the second destination is a more precise destination than the first destination.

For example, if the first destination is the Radio & TV Tower, the second destination may be a specific entrance/exit of the Radio & TV Tower. For another example, if the first destination is a city, the second destination may be a specific building such as a railway station or a shopping mall in the city.

Implementation E: The second destination is a location searched out by the navigation system on the map based on the first destination. In this case, the second destination may be a recommended location associated with the first destination.

The second destination may be a location directly or indirectly searched out by the navigation system on the map based on the first destination.

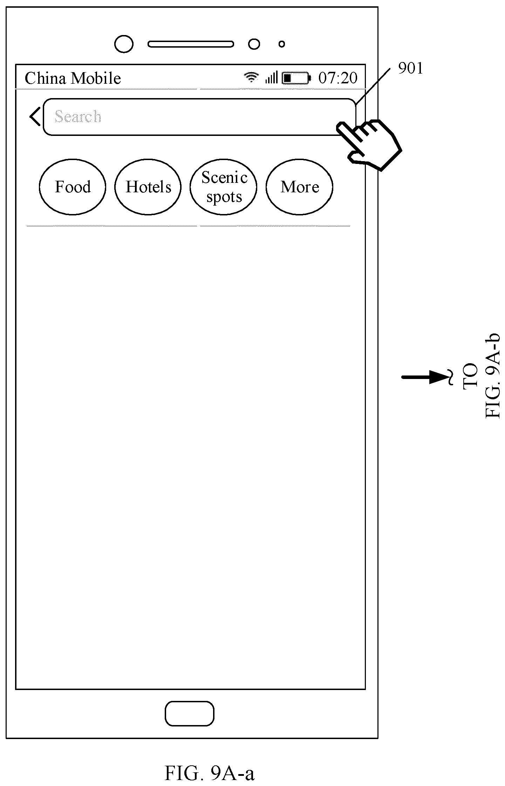

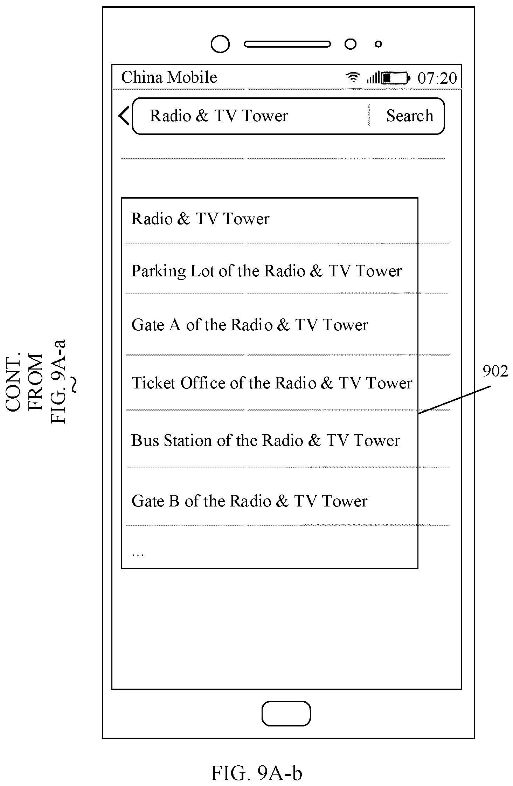

In an example, as shown in FIG. 9A-a to FIG. 9A-b, the user may enter the first destination "Radio & TV Tower" in an input box 901 shown in FIG. 9A-a. In this case, the navigation system directly searches out recommended locations on the map based on the first destination, and displays a user interface shown in FIG. 9A-b. Specifically, the recommended locations include: "Radio & TV Tower", "Parking Lot of the Radio & TV Tower", "Gate A of the Radio & TV Tower", and the like, as shown in a box 902 in FIG. 9A-b. In this example, the second destination may be one of the locations in the box 902 directly searched out by the navigation system based on the first destination.

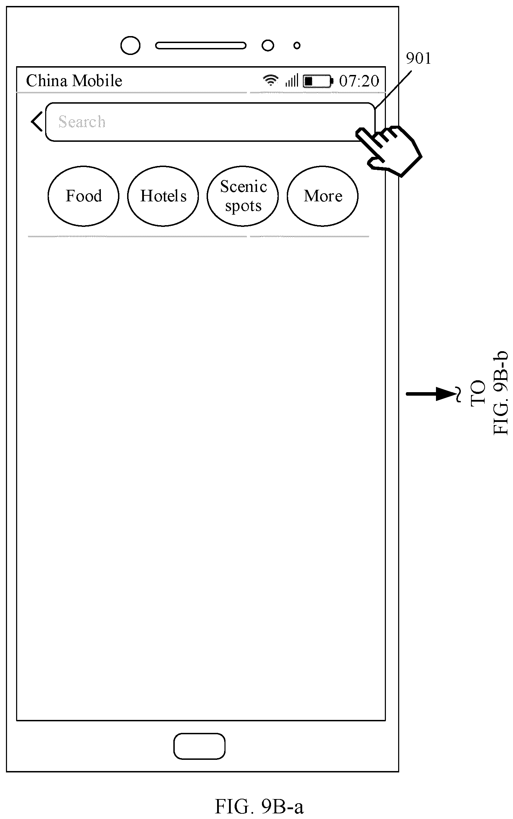

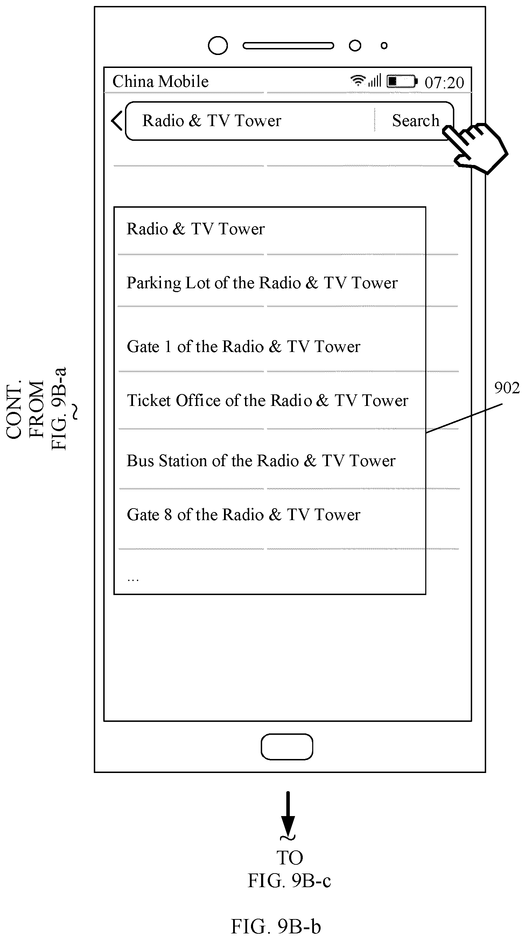

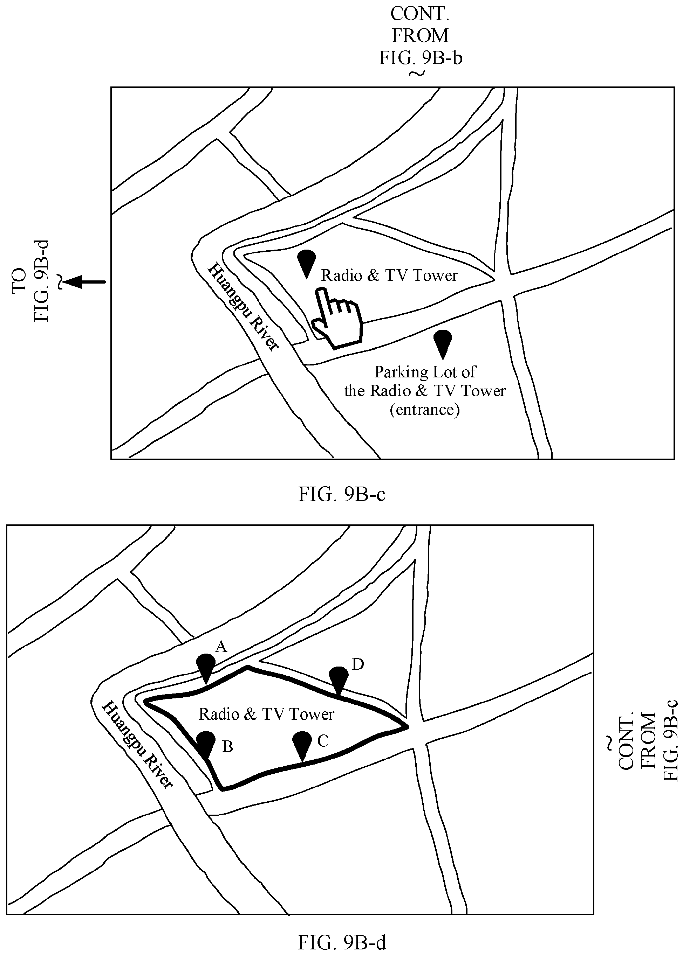

In another example, as shown in FIG. 9B-a to FIG. 9B-d, the user may enter the first destination "Radio & TV Tower" in the input box 901 shown in FIG. 9B-a. In this case, the navigation system displays a user interface shown in FIG. 9B-b. After the user taps a "Search" key, the navigation system searches out two recommended locations on the map: "Radio & TV Tower (that is, the building of the Radio & TV Tower)" and "Parking Lot of the Radio & TV Tower (entrance)", as shown in FIG. 9B-c. Then, the user may select the "Radio & TV Tower". Based on this, the navigation system searches out recommended locations "Gate A to Gate D" on the map, as shown in FIG. 9B-d. In this example, the second destination may be the recommended locations directly searched out based on the first destination: the Radio & TV Tower or a parking lot of the Radio & TV Tower (entrance), or may be any one of the recommended locations "Gate A to Gate D of the Radio & TV Tower" indirectly searched out based on the first destination.

It should be noted that "the navigation system searches out a location based on a destination" in other parts of this application may include direct search and indirect search, provided that this does not conflict with other technical features. This is uniformly described herein.

Certainly, the second destination may also be another location in the initial navigation region.

The following describes prompt information and a specific implementation in which the navigation system determines the second destination based on the second input information.

Implementation 1: The navigation system prompts the user with "Please confirm a navigation destination", for example, in the manner of voice, text, or a combination thereof. In this case, the user may tap a location on the map. After receiving the tap operation, the navigation system uses a location indicated by the location as the navigation destination, that is, the second destination.

Implementation 2: The navigation system prompts the user with "Please confirm a navigation destination", for example, in the manner of voice, text, or a combination thereof. At the same time, at least one location in the initial navigation region is displayed on a screen of the navigation system.

Optionally, the at least one location may include a landmark building in the initial navigation region, such as a railway station, a high-speed railway station, or a famous scenic spot, or an entrance/exit of the initial navigation region. Optionally, the at least one location may include some locations in the initial navigation region that are determined by the navigation system based on historical information of the user, for example, some locations in the initial navigation region that the user frequently visited historically. The at least one location may be the same as or different from the recommended location associated with the first destination.

In this case, the user may select one location from the at least one location as the second destination. Certainly, if the at least one location does not include the destination that the user expects to reach, the user may alternatively tap a location on the map. After receiving the tap operation, the navigation system uses a location indicated by the location as the navigation destination, that is, the second destination.

For example, as shown in FIG. 10a, the navigation system prompts in a dialog box 1001 "Please confirm a navigation destination", and displays a region 1002 in which the initial navigation region "Radio & TV Tower" is located, and four locations (marked as A to D) in the initial navigation region. The user may tap a location C. After detecting the tap operation, the navigation system may display a dialog box 1003, and display address information of the location C in the dialog box 1003. As shown in FIG. 10b, the navigation system may use the location C as the second destination. Alternatively, optionally, after the user taps a navigation key, the navigation system may use the location C as the second destination (not shown in FIG. 10a to FIG. 10b).

Implementation 3: The navigation system prompts the user with "Please enter a navigation destination", for example, in the manner of voice, text, or a combination thereof. In this case, the user may input destination information to the navigation system in the manner of voice, text, or a combination thereof. After detecting the information, the navigation system may output at least one recommended location associated with the destination, and the user selects one location from the at least one recommended location as the second destination.

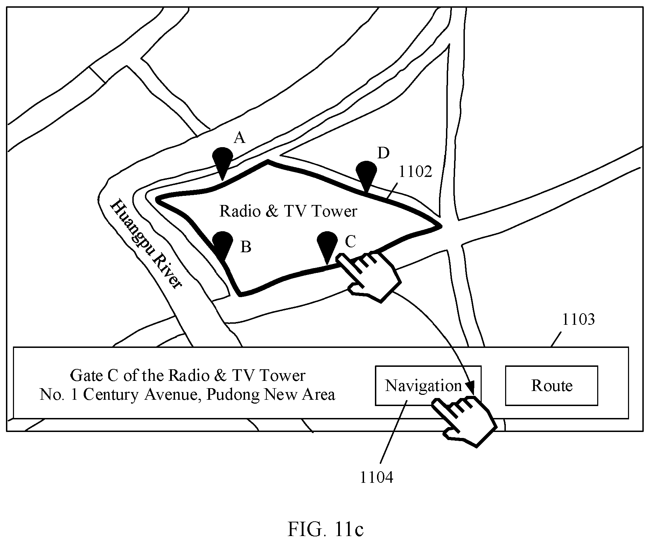

Optionally, if the at least one recommended location does not include the destination that the user expects to reach, the user may alternatively tap a location on the map. After receiving the tap operation, the navigation system uses a location indicated by the location as the second destination. For example, as shown in FIG. 11a, the navigation system may display an input box 1101, to prompt the user to enter a navigation destination. Different from the dialog box 1001 in FIG. 10a to FIG. 10b, the user may enter a navigation destination in the input box 1101, but cannot perform an operation on the dialog box 1001. As shown in FIG. 11b, after the user enters the navigation destination "Radio & TV Tower" in the input box 1101, the navigation system displays a region 1102 in which the Radio & TV Tower is located, and recommended locations A to D based on the Radio & TV Tower. The user may tap the recommended location C. After detecting the tap operation, the navigation system may display a dialog box 1103, and display address information of the location C in the dialog box 1103. As shown in FIG. 11c, the navigation system may directly use the recommended location C as the second destination. Alternatively, optionally, after the user taps a navigation key 1104, the navigation system may use the recommended location C as the second destination (this is used as an example for description in FIG. 11a to FIG. 11c).

S107: The navigation system determines a target navigation route in response to the second input information. An end point of the target navigation route is the second destination. Optionally, a start point of the target navigation route is a current location of the navigation system.

Compared with the initial navigation route, the target navigation route is a precise navigation route. The second navigation destination is determined by the user in the process of performing navigation based on the initial navigation route. In this case, the vehicle has departed and traveled for a period of time. Therefore, the navigation system needs to determine a new current location. How the navigation system determines a current location is not limited in this embodiment of this application. For example, the current location may be entered by the user, or may be obtained by the navigation system by positioning the navigation system using a positioning function.

According to the invention, the navigation system determines a navigation route in response to the second input information. In this case, the navigation system may use the route as the target navigation route.

In some alternatives, not forming part of the invention, the navigation system determines a plurality of navigation routes in response to the second input information. All start points of the plurality of navigation routes are the current location of the navigation system, and all end points are the second destination. In this case, the navigation system may display the plurality of navigation routes, and use a route indicated by the user in the plurality of navigation routes as the target navigation route as instructed by the user. Alternatively, the navigation system may autonomously use one of the plurality of navigation routes as the target navigation route, to reduce a quantity of human-machine interactions with the navigation system and improve user experience. For example, the navigation system may use a navigation route with the best road condition in the plurality of navigation routes as the target navigation route.

S108: The navigation system displays the target navigation route, and continues navigation based on the target navigation route.

After determining the target navigation route, the navigation system may automatically perform navigation based on the target navigation route. Alternatively, the navigation system may perform navigation based on the target navigation route as instructed by the user, for example, after detecting a voice instruction "start navigation" of the user or detecting a screen tap operation performed by the user based on a "start navigation" key on a current interface. The "continues navigation" herein is for "starts navigation" in S104, and is specifically navigation that is after a new navigation route is planned. In FIG. 10a to FIG. 10b, S101 to S104 are referred to as a "navigation enabling phase", and S105 to S108 are referred to as a "navigation switching phase".

It should be noted that, a part or all of steps in any two or more navigation methods provided above may be combined to form a new embodiment when no conflict occurs.

In the navigation method provided in this embodiment of this application, an initial point-to-region navigation route is first provided for a user, and navigation is started based on the initial navigation route. In this case, the user may depart instantly. Then, after the user departs, a precise point-to-point navigation route is provided for the user, so that navigation is performed based on the precise navigation route. Compared with a technical solution in the conventional technology in which the user may not be ready to depart before precise point-to-point navigation is directly performed, in this technical solution, an initial navigation route can be planned only after information about a region is confirmed in an initial phase of navigation, without repeatedly confirming a destination with the user, and the user is guided to depart. This helps reduce a quantity of human-machine interactions, reducing time occupied by navigation before departure, and improving user experience. In addition, in the initial phase of navigation, instant navigation may be started upon one input. This implements instant departure and instant navigation, facilitating navigation in an emergency. In addition, compared with a one-time navigation manner in the conventional technology, an interval-based and segment-based navigation manner used in this embodiment of this application helps improve time management efficiency of a user, improving user experience. The navigation method provided above is described below by using a specific example. With reference to FIG. 2B, this specific example is described by using an example in which navigation to the "Radio & TV Tower" is performed.

FIG. 12 is a schematic flowchart of a navigation method according to an embodiment of this application. The method shown in FIG. 12 may include the following steps.

S201: An interaction interface, for example, a microphone, collects voice information "I am going to the Radio & TV Tower" sent by a user.

When a vehicle is started, a navigation system is enabled. The user sends the voice information "I am going to the Radio & TV Tower", and the microphone in the navigation system captures the voice information.

S202: The microphone sends the voice information to a processing module.

S203: The processing module extracts address information, that is, the Radio & TV Tower, in the voice information by using technologies such as voice recognition and word segmentation.

S204: The processing module sends the address information "Radio & TV Tower" to a navigation module.

S205: The navigation module searches out a location of the Radio & TV Tower on a map based on the address information "Radio & TV Tower", uses a plurality of entrances/exits of the Radio & TV Tower as recommended locations, and determine a region including the plurality of entrances/exits of the Radio & TV Tower as an initial navigation region. The navigation module obtains current location information of the vehicle from a positioning module, and determines an initial navigation route using the current location of the vehicle as a start point and using the initial navigation region as an end point.

The positioning module may obtain current location information of the vehicle in real time, and send the current location information of the vehicle to the navigation module.

S206: The navigation module starts navigation based on the initial navigation route.

In a navigation process, a status sensor may obtain driving parameters (such as a speed or an acceleration) of the vehicle in real time, and send the obtained driving parameters to the processing module, so that the processing module determines whether the vehicle is currently in a safe driving state.

S207: When determining that the vehicle is currently in the safe driving state, the processing module controls an interaction interface to output prompt information, where the prompt information is for prompting the user to confirm or enter a navigation destination. The navigation destination is a second destination.

In addition, when determining that the vehicle is currently in the safe driving state, the processing module may control the speaker to output the prompt information "Please confirm a navigation destination", and control a screen to display a map around the initial navigation region (that is, the Radio & TV Tower). Optionally, if a recommended location is matched on the map, the recommended location is also presented.

S208: The processing module receives, through the interaction interface, the second destination "Gate A of the Radio & TV Tower" indicated by the user.

After the navigation system interacts with the user for one or more times, the processing module is enabled to determine that the second destination is "Gate A of the Radio & TV Tower". For a specific example, refer to FIG. 10a to FIG. 10b or FIG. 11a to FIG. 11c. Details are not described herein again.

S209: The processing module sends the second destination "Gate A of the Radio & TV Tower" to the navigation module.

S210: The navigation module obtains the current location information of the vehicle from the positioning module, and determines a target navigation route using the current location of the vehicle as a start point and using the gate A of the Radio & TV Tower as an end point.

S211: The navigation module performs navigation based on the target navigation route.

For a specific implementation of related content in this embodiment, refer to the foregoing description. Details are not described herein again.

The foregoing mainly describes the solutions provided in embodiments of this application from a perspective of the methods. Corresponding hardware structures and/or software modules for performing the functions are included to implement the foregoing functions. Persons skilled in the art should be easily aware that, in combination with units and algorithm steps of the examples described in embodiments disclosed in this specification, this application can be implemented in a form of hardware or a combination of hardware and computer software. Whether a function is performed by hardware or hardware driven by computer software depends on particular applications and design constraints of the technical solutions. Persons skilled in the art may use different methods to implement the described functions for each particular application, but it should not be considered that the implementation goes beyond the scope of this application.

In embodiments of this application, the navigation system may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division in an actual implementation.

Refer to FIG. 13. FIG. 13 is a schematic diagram of a structure of a navigation system 120 according to an embodiment of this application. The navigation system 120 is configured to perform the foregoing navigation method, for example, perform the navigation method shown in FIG. 3. For example, the navigation system 120 may include an input unit 1201, a determining unit 1202, and a navigation unit 1203.

The input unit 1201 is configured to receive first input information. The first input information indicates a first destination, and the first destination is a region. The determining unit 1202 is configured to determine an initial navigation route in response to the first input information. An end point of the initial navigation route is an initial navigation region, and the initial navigation region is a region determined based on the first destination. The navigation unit 1203 is configured to start navigation based on the initial navigation route. The input unit 1201 is configured to receive second input information. The second input information indicates a second destination, and the second destination is a location. The determining unit 1202 is further configured to determine a target navigation route in response to the second input information. An end point of the target navigation route is the second destination. The navigation unit 1203 is further configured to continue navigation based on the target navigation route.

For example, with reference to FIG. 3, the input unit 1201 may be configured to perform S101 and S106, the determining unit 1202 may be configured to perform S102 and S107, and the navigation unit 1203 may be configured to perform S104 and S108.

Optionally, the first destination meets one or more of the following conditions: The navigation system searches out a plurality of locations on a map based on the first destination, and the plurality of locations are concentrated in a range; or the navigation system searches out a region on the map based on the first destination.

Optionally, the second destination meets the following condition: The navigation system searches out a location on the map of the navigation system based on the second destination.

Optionally, the initial navigation region is a region including a part or all of recommended locations searched out by the navigation system on the map based on the first destination.

Optionally, the initial navigation region is a region represented by the first destination.

Optionally, the initial navigation region includes a region represented by the first destination.

Optionally, the second destination is a location in the initial navigation region.

Optionally, the second destination is a location outside the initial navigation region.

Optionally, the second destination is a location whose distance from the first destination is less than a threshold.

Optionally, the second destination is a location included in the first destination.

Optionally, the second destination is a location searched out by the navigation system on the map based on the first destination.

Optionally, the navigation system 120 further includes an output unit 1204.

Optionally, the output unit 1204 is configured to output prompt information. The prompt information is for prompting a user to confirm a navigation destination. According to the invention, with reference to FIG. 3, the output unit 1204 is configured to perform S105. Optionally, the output unit 1204 is specifically configured to output the prompt information in a process of performing navigation based on the initial navigation route.

According to the invention, the output unit 1204 is specifically configured to output the prompt information when it is determined that a vehicle is currently in a safe driving state.

Optionally, the safe driving state meets the following condition: A driving speed of a vehicle in which the navigation system is located is less than or equal to a preset threshold; according to the invention, the safe driving state meets the following condition: the vehicle in which the navigation system is located is currently in an autonomous driving mode.

The prompt information is for prompting the user to enter the second destination.

Optionally, the prompt information is for prompting the user with at least one location in the initial navigation region, and the at least one location is for determining the second destination.

Optionally, the output unit 1204 is configured to display the initial navigation region. In this case, the output unit 1204 may be specifically a display unit such as a display. For example, with reference to FIG. 3, the output unit 1204 may be configured to perform the step of displaying the initial navigation region in S103.

Optionally, the output unit 1204 is configured to display the initial navigation route. In this case, the output unit 1204 may be specifically a display unit such as a display. For example, with reference to FIG. 3, the output unit 1204 may be configured to perform the step of displaying the initial navigation route in S103.

Optionally, the determining unit 1202 is specifically configured to: determine a first navigation route and a second navigation route in response to the first input information, where a planned end point of the first navigation route is a first location, a planned end point of the second navigation route is a second location, and the planned end points are locations in the initial navigation region or entrances of the initial navigation region; and determine the initial navigation route from the first navigation route and the second navigation route. Optionally, the first place is different from the second place.

For specific descriptions of the optional manners, refer to the method embodiments. Details are not described herein again. In addition, for any of the explanations and descriptions of beneficial effects of the navigation system 120 provided above, refer to the foregoing corresponding method embodiment. Details are not described again.

For example, with reference to FIG. 2B, a part or all of the functions implemented by the input unit 1201 and the output unit 1204 may be implemented through the interaction interface 101. A part or all of the functions implemented by the determining unit 1202 may be implemented by the processing module 102 and/or the navigation module 104. A part or all of the functions implemented by the navigation unit 1203 may be implemented by the navigation module 104.

An embodiment not forming part of the invention further provides a navigation system, including an input/output apparatus, a memory, and a processor. The input/output apparatus, the memory, and the processor are coupled to each other. The memory is configured to store computer instructions. The processor is configured to invoke the computer instructions, and perform, in combination with the input/output apparatus, any one of the navigation methods provided above, for example, the navigation method shown in FIG. 3.

For example, with reference to FIG. 2B, a part or all of functions of the input/output apparatus may be implemented through the interaction interface 101. The processor may be configured to invoke the computer instructions in the memory, to perform the steps performed by the processing module 102 and the navigation module 104 in FIG. 2B. In addition, the navigation system may further include the positioning module 103 and the status sensor 105 shown in FIG. 2B.

An embodiment of this application further provides a chip system 130. As shown in FIG. 14, the chip system 130 may be used in a navigation system. The chip system includes at least one processor 131 and at least one interface circuit 132.

In an example, when the chip system 130 includes one processor and one interface circuit, the processor may be a processor 131 shown in a solid-line box (or a processor 131 shown in a dashed-line box) in FIG. 14, and the interface circuit may be an interface circuit 132 shown in a solid-line box (or an interface circuit 132 shown in a dashed-line box) in FIG. 14. When the chip system 130 includes two processors and two interface circuits, the two processors include the processor 131 shown in the solid-line box and the processor 131 shown in the dashed-line box in FIG. 14, and the two interface circuits include the interface circuit 132 shown in the solid-line box and the interface circuit 132 shown in the dashed-line box in FIG. 14. This is not limited.

The processor 131 and the interface circuit 132 may be connected to each other through a line. For example, the interface circuit 132 may be configured to receive a signal. For another example, the interface circuit 132 may be configured to send a signal to another apparatus (for example, the processor 131). For example, the interface circuit 132 may read computer instructions stored in a memory of the navigation system, and send the computer instructions to the processor 131. The processor 131 executes the instructions, and implements the steps in the foregoing embodiments in combination with an input/output apparatus of the navigation system, for example, implements the steps performed by the navigation system in the method embodiment shown in FIG. 3. Certainly, the chip system may further include another discrete component. This is not specifically limited in this embodiment of this application.

Another embodiment of this application further provides a computer-readable storage medium. The computer-readable storage medium stores computer instructions. When the instructions are executed on a computer device, the computer device performs any one of the navigation methods provided above, for example, the steps performed by the navigation system in the method embodiment shown in FIG. 3.

In some embodiments, the disclosed methods may be implemented as computer program instructions encoded in a machine-readable format on a computer-readable storage medium or encoded on another non-transitory medium or product.

FIG. 15 is an example of a conceptual partial view of a computer program product according to an embodiment of this application. The computer program product includes a computer program for executing a computer process on a computing device.

In an embodiment, the computer program product is provided by using a signal-carrying medium 140. The signal-carrying medium 140 may include one or more computer instructions. When the one or more computer instructions are executed by one or more processors, a part or all of the functions described for FIG. 3 may be provided. Alternatively, when the one or more computer instructions are executed by a computer device, a part or all of the functions described for FIG. 3 may be provided. For example, one or more features of S101 to S108 in FIG. 3 may be borne by one or more instructions associated with the signal-carrying medium 140. In addition, the program instructions in FIG. 15 are also described as example instructions.

In some examples, the signal-carrying medium 140 may include a computer-readable medium 141, for example, but not limited to, a hard disk drive, a compact disc (CD), a digital video disc (DVD), a digital tape, a memory, a read-only memory (read-only memory, ROM), or a random access memory (random access memory, RAM).

In some implementations, the signal-carrying medium 140 may include a computer recordable medium 142, for example, but not limited to, a memory, a read/write (R/W) CD, or an R/W DVD. In some implementations, the signal-carrying medium 140 may include a communication medium 143, for example, but not limited to, a digital and/or analog communication medium (for example, an optical fiber cable, a waveguide, a wired communication link, or a wireless communication link).

The signal-carrying medium 140 may be conveyed by a communication medium 143 in a wireless form (for example, a wireless communication medium that complies with the IEEE 802.11 standard or another transmission protocol). The one or more program instructions may be, for example, one or more computer-executable instructions or one or more logic implementation instructions.

In some examples, an information extraction apparatus with formatted text described for FIG. 15 may be configured to provide various operations, functions, or actions in response to one or more program instructions in the computer-readable medium 141, the computer recordable medium 142, and/or the communication medium 143.

It should be understood that the arrangement described herein is merely used as an example. Thus, persons skilled in the art appreciate that another arrangement and another element (for example, a machine, an interface, a function, a sequence, and a group of functions) can be used to replace the arrangement, and some elements may be omitted together depending on a desired result. In addition, many of the described elements are functional entities that can be implemented as discrete or distributed components, or implemented in any suitable combination at any suitable location in combination with another component.

The foregoing descriptions about implementations allow persons skilled in the art to clearly understand that, for the purpose of convenient and brief description, division into the foregoing functional modules is used as an example for illustration. During actual application, the foregoing functions can be allocated to different modules and implemented based on a requirement, that is, an inner structure of an apparatus is divided into different functional modules to implement a part or all of the functions described above.

**In** the several embodiments provided in this application, it should be understood that the disclosed apparatus and method may be implemented in other manners. For example, the described apparatus embodiments are merely examples. For example, division into the modules or units is merely logical function division, and may be other division during actual implementation. For example, a plurality of units or components may be combined or may be integrated into another apparatus, or some features may be ignored or not performed. In addition, the displayed or discussed mutual coupling or direct coupling or communication connection may be implemented through some interfaces. The indirect coupling or communication connection between the apparatuses or units may be implemented in electrical, mechanical, or other forms.

The units described as separate components may or may not be physically separate, and components displayed as units may be one or more physical units, that is, may be located in one place, or may be distributed on a plurality of different places. A part or all of the units may be selected based on an actual requirement to achieve an objective of the solutions of embodiments. In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to a conventional technology, or all or a part of the technical solutions may be implemented in the form of a software product. The software product is stored in a storage medium and includes several instructions for indicating a device (which may be a single-chip microcomputer, a chip or the like) or a processor to perform all or a part of the steps of the methods described in embodiments of this application. The foregoing storage medium includes any medium that can store program code, such as a USB flash drive, a removable hard disk, a read-only memory (ROM), a random access memory (RAM), a magnetic disk, or an optical disc.

## Claims

1. A navigation method, applied to a navigation system, wherein the method comprises:
receiving (S101) first input information, wherein the first input information indicates a first destination, and the first destination is a region;
determining (S102) an initial navigation route in response to the first input information, wherein an end point of the initial navigation route is an initial navigation region, and the initial navigation region is a region determined based on the first destination;
starting navigation (S104) based on the initial navigation route;
receiving (S106) second input information, wherein the second input information indicates a second destination, and the second destination is a location;
determining (S107) a target navigation route in response to the second input information, wherein an end point of the target navigation route is the second destination; and
continuing (S108) navigation based on the target navigation route,
wherein the method further comprises:
outputting (S105) prompt information, wherein the prompt information is for prompting a user to enter the second destination,
wherein the outputting (S105) prompt information comprises:
outputting the prompt information when it is determined that a vehicle is currently in a safe driving state, **characterized in that** the safe driving state meets the following condition:
the vehicle in which the navigation system is located is currently in an autonomous driving mode.

2. The method according to claim 1, wherein the first destination meets one or more of the following conditions:
the navigation system searches out a plurality of locations on a map based on the first destination, and the plurality of locations are concentrated in a range; or
the navigation system searches out a region on the map based on the first destination.

3. The method according to claim 1 or 2, wherein
the initial navigation region is a region comprising a part or all of recommended locations searched out by the navigation system on the map based on the first destination;
the initial navigation region comprises a region represented by the first destination; or
the initial navigation region is a region represented by the first destination.

4. The method according to any one of claims 1 to 3, wherein the second destination meets the following condition:
the navigation system searches out a location on the map of the navigation system based on the second destination.

5. The method according to any one of claims 1 to 4, wherein
the second destination is a location in the initial navigation region;
the second destination is a location outside the initial navigation region;
the second destination is a location whose distance from the first destination is less than a threshold;
the second destination is a location comprised in the first destination; or
the second destination is a location searched out by the navigation system on the map based on the first destination.

6. The method according to any one of claims 1 to 5, wherein the receiving (S106) second input information comprises:
receiving the second input information in a process of performing navigation based on the initial navigation route.

7. The method according to any of claims 1 to 6, wherein the outputting (S105) prompt information comprises:
outputting the prompt information in the process of performing navigation based on the initial navigation route.

8. The method according to any one of claims 1 to 7, wherein the prompt information is for prompting the user with at least one location in the initial navigation region, and the at least one location is for determining the second destination.

9. The method according to any one of claims 1 to 8, wherein the determining (S102) an initial navigation route in response to the first input information comprises:
determining a first navigation route and a second navigation route in response to the first input information, wherein a planned end point of the first navigation route is a first location, a planned end point of the second navigation route is a second location, and the planned end points are locations in the initial navigation region or entrances of the initial navigation region; and
determining the initial navigation route from the first navigation route and the second navigation route.

10. A computer system, comprising a memory and a processor, wherein the memory is configured to store computer instructions; and the processor is configured to invoke the computer instructions, so that the computer system implements the navigation method according to any one of claims 1 to 9.

11. A chip system (130), wherein the chip system (130) is used in a navigation system; the chip system (130) comprises an interface circuit (132) and a processor (131); the interface circuit (132) and the processor (131) are connected to each other through a line; and the processor (131) receives computer instructions from a memory of the navigation system through the interface circuit (132) and executes the computer instructions, so that the processor (131) is enabled to implement the navigation method according to any one of claims 1 to 9.

12. A computer-readable storage medium, configured to store computer instructions, wherein when the computer instructions are executed on a computer device, the computer device is enabled to perform the navigation method according to any one of claims 1 to 9.

13. A computer program product, comprising computer instructions, wherein when the computer instructions are executed on a computer device, the computer device is enabled to perform the navigation method according to any one of claims 1 to 9.

## Patentansprüche

1. Navigationsverfahren, das auf ein Navigationssystem angewendet wird, wobei das Verfahren Folgendes umfasst:
Empfangen (S101) erster Eingabeinformationen, wobei die ersten Eingabeinformationen ein erstes Ziel angeben und das erste Ziel eine Region ist;
Bestimmen (S102) einer anfänglichen Navigationsroute als Reaktion auf die ersten Eingabeinformationen, wobei ein Endpunkt der anfänglichen Navigationsroute eine anfängliche Navigationsregion ist und die anfängliche Navigationsregion eine Region ist, die basierend auf dem ersten Ziel bestimmt wird;
Starten einer Navigation (S104) basierend auf der anfänglichen Navigationsroute;
Empfangen (S106) zweiter Eingabeinformationen, wobei die zweiten Eingabeinformationen ein zweites Ziel angeben und das zweite Ziel ein Standort ist;
Bestimmen (S107) einer Zielnavigationsroute als Reaktion auf die zweiten Eingabeinformationen, wobei ein Endpunkt der Zielnavigationsroute das zweite Ziel ist; und
Fortsetzen (S108) der Navigation basierend auf der Zielnavigationsroute,
wobei das Verfahren ferner Folgendes umfasst:
Ausgeben (S105) von Aufforderungsinformationen, wobei die Aufforderungsinformationen zum Auffordern eines Benutzers, das zweite Ziel einzugeben, sind,
wobei das Ausgeben (S105) von Aufforderungsinformationen Folgendes umfasst:
Ausgeben der Aufforderungsinformationen, wenn bestimmt wird, dass ein Fahrzeug aktuell in einem sicheren Fahrzustand ist, **dadurch gekennzeichnet, dass** der sichere Fahrzustand die folgende Bedingung erfüllt:
das Fahrzeug, in dem sich das Navigationssystem befindet, ist aktuell in einem autonomen Fahrmodus.

2. Verfahren nach Anspruch 1, wobei das erste Ziel eine oder mehrere der folgenden Bedingungen erfüllt:
das Navigationssystem sucht basierend auf dem ersten Ziel eine Vielzahl von Standorten auf einer Karte und die Vielzahl von Standorten ist in einem Bereich konzentriert; oder
das Navigationssystem sucht basierend auf dem ersten Ziel eine Region auf der Karte.

3. Verfahren nach Anspruch 1 oder 2, wobei
die anfängliche Navigationsregion eine Region ist, umfassend einen Teil oder alle empfohlenen Standorte, die basierend auf dem ersten Ziel durch das Navigationssystem auf der Karte gesucht werden;
die anfängliche Navigationsregion eine Region umfasst, die durch das erste Ziel dargestellt ist; oder
die anfängliche Navigationsregion eine Region ist, die durch das erste Ziel dargestellt ist.

4. Verfahren nach einem der Ansprüche 1 bis 3, wobei das zweite Ziel die folgende Bedingung erfüllt:
das Navigationssystem sucht basierend auf dem zweiten Ziel einen Standort auf der Karte des Navigationssystems.

5. Verfahren nach einem der Ansprüche 1 bis 4, wobei
das zweite Ziel ein Standort in der anfänglichen Navigationsregion ist;
das zweite Ziel ein Standort außerhalb der anfänglichen Navigationsregion ist;
das zweite Ziel ein Standort ist, dessen Distanz von dem ersten Ziel weniger als ein Schwellenwert ist;
das zweite Ziel ein Standort ist, der in dem ersten Ziel enthalten ist; oder
das zweite Ziel ein Standort ist, der basierend auf dem ersten Ziel durch das Navigationssystem auf der Karte gesucht wird.

6. Verfahren nach einem der Ansprüche 1 bis 5, wobei das Empfangen (S106) der zweiten Eingabeinformationen Folgendes umfasst:
Empfangen der zweiten Eingabeinformationen in einem Vorgang zum Durchführen der Navigation basierend auf der anfänglichen Navigationsroute.

7. Verfahren nach einem der Ansprüche 1 bis 6, wobei das Ausgeben (S105) von Aufforderungsinformationen Folgendes umfasst:
Ausgeben der Aufforderungsinformationen in dem Vorgang zum Durchführen der Navigation basierend auf der anfänglichen Navigationsroute.

8. Verfahren nach einem der Ansprüche 1 bis 7, wobei die Aufforderungsinformationen zum Auffordern des Benutzers mit mindestens einem Standort in der anfänglichen Navigationsregion sind und der mindestens eine Standort zum Bestimmen des zweiten Ziels ist.

9. Verfahren nach einem der Ansprüche 1 bis 8, wobei das Bestimmen (S102) einer anfänglichen Navigationsroute als Reaktion auf die ersten Eingabeinformationen Folgendes umfasst:
Bestimmen einer ersten Navigationsroute und einer zweiten Navigationsroute als Reaktion auf die ersten Eingabeinformationen, wobei ein geplanter Endpunkt der ersten Navigationsroute ein erster Standort ist, ein geplanter Endpunkt der zweiten Navigationsroute ein zweiter Standort ist und die geplanten Endpunkte Standorte in der anfänglichen Navigationsregion oder Eingänge der anfänglichen Navigationsregion sind; und
Bestimmen der anfänglichen Navigationsroute aus der ersten Navigationsroute und der zweiten Navigationsroute.

10. Computersystem, umfassend einen Speicher und einen Prozessor, wobei der Speicher dazu konfiguriert ist, Computeranweisungen zu speichern; und der Prozessor dazu konfiguriert ist, die Computeranweisungen aufzurufen, so dass das Computersystem das Navigationsverfahren nach einem der Ansprüche 1 bis 9 implementiert.

11. Chipsystem (130), wobei das Chipsystem (130) in einem Navigationssystem verwendet wird; das Chipsystem (130) eine Schnittstellenschaltung (132) und einen Prozessor (131) umfasst; die Schnittstellenschaltung (132) und der Prozessor (131) über eine Leitung miteinander verbunden sind; und der Prozessor (131) über die Schnittstellenschaltung (132) Computeranweisungen von einem Speicher des Navigationssystems empfängt und die Computeranweisungen ausführt, so dass der Prozessor (131) in die Lage versetzt wird, das Navigationsverfahren nach einem der Ansprüche 1 bis 9 zu implementieren.

12. Computerlesbares Speichermedium, das dazu konfiguriert ist, Computeranweisungen zu speichern, wobei, wenn die Computeranweisungen auf einer Computervorrichtung ausgeführt werden, die Computervorrichtung in die Lage versetzt wird, das Verfahren nach einem der Ansprüche 1 bis 9 durchzuführen.

13. Computerprogrammprodukt, umfassend Computeranweisungen, wobei, wenn die Computeranweisungen auf einer Computervorrichtung ausgeführt werden, die Computervorrichtung in die Lage versetzt wird, das Verfahren nach einem der Ansprüche 1 bis 9 durchzuführen.

## Revendications

1. Procédé de navigation, appliqué à un système de navigation, dans lequel le procédé comprend :
la réception (S101) de premières informations d'entrée, dans lequel les premières informations d'entrée indiquent une première destination, et la première destination est une région ;
la détermination (S102) d'un itinéraire de navigation initial en réponse aux premières informations d'entrée, dans lequel un point final de l'itinéraire de navigation initial est une région de navigation initiale, et la région de navigation initiale est une région déterminée en fonction de la première destination ;
la démarrage de la navigation (S104) en fonction de l'itinéraire de navigation initial ;
la réception (S106) de secondes informations d'entrée, dans lequel les secondes informations d'entrée indiquent une seconde destination, et la seconde destination est un emplacement ;
la détermination (S107) d'un itinéraire de navigation cible en réponse aux secondes informations d'entrée, dans lequel un point final de l'itinéraire de navigation cible est la seconde destination ; et
la poursuite (S108) de la navigation en fonction de l'itinéraire de navigation cible,
dans lequel le procédé comprend en outre :
la délivrance (S105) d'informations d'invite, dans lequel les informations d'invite sont destinées à inviter l'utilisateur à saisir la seconde destination,
dans lequel la délivrance (S105) d'informations d'invite comprend :
la délivrance des informations d'invite lorsqu'il est déterminé qu'un véhicule se trouve actuellement dans un état de conduite sûr, **caractérisé en ce que** l'état de conduite sûr répond à la condition suivante :
le véhicule dans lequel se trouve le système de navigation est actuellement dans un mode de conduite autonome.

2. Procédé selon la revendication 1, dans lequel la première destination répond à l'une ou plusieurs des conditions suivantes :
le système de navigation recherche une pluralité d'emplacements sur une carte en fonction de la première destination, et la pluralité d'emplacements sont concentrés dans une plage ; ou
le système de navigation recherche une région sur la carte en fonction de la première destination.

3. Procédé selon la revendication 1 ou 2, dans lequel
la région de navigation initiale est une région comprenant une partie ou la totalité d'emplacements recommandés recherchés par le système de navigation sur la carte en fonction de la première destination ;
la région de navigation initiale comprend une région représentée par la première destination ; ou
la région de navigation initiale est une région représentée par la première destination.

4. Procédé selon l'une quelconque des revendications 1 à 3, dans lequel la seconde destination répond à la condition suivante :
le système de navigation recherche un emplacement sur la carte du système de navigation en fonction de la seconde destination.

5. Procédé selon l'une quelconque des revendications 1 à 4, dans lequel
la seconde destination est un emplacement dans la région de navigation initiale ;
la seconde destination est un emplacement à l'extérieur de la région de navigation initiale ;
la seconde destination est un emplacement dont la distance par rapport à la première destination est inférieure à un seuil ;
la seconde destination est un emplacement compris dans la première destination ; ou
la seconde destination est un emplacement recherché par le système de navigation sur la carte en fonction de la première destination.

6. Procédé selon l'une quelconque des revendications 1 à 5, dans lequel la réception (S106) de secondes informations d'entrée comprend :
la réception des secondes informations d'entrée dans un processus de réalisation de navigation en fonction de l'itinéraire de navigation initial.

7. Procédé selon l'une quelconque des revendications 1 à 6, dans lequel la délivrance (S105) d'informations d'invite comprend :
la délivrance des informations d'invite dans le processus de réalisation de navigation en fonction de l'itinéraire de navigation initial.

8. Procédé selon l'une quelconque des revendications 1 à 7, dans lequel les informations d'invite sont destinées à indiquer à l'utilisateur au moins un emplacement dans la zone de navigation initiale, et l'au moins un emplacement est destiné à déterminer la seconde destination.

9. Procédé selon l'une quelconque des revendications 1 à 8, dans lequel la détermination (S102) d'un itinéraire de navigation initial en réponse aux premières informations d'entrée comprend :
la détermination d'un premier itinéraire de navigation et d'un second itinéraire de navigation en réponse aux premières informations d'entrée, dans lequel un point final prévu du premier itinéraire de navigation est un premier emplacement, un point final prévu du second itinéraire de navigation est un second emplacement, et les points finaux prévus sont des emplacements dans la région de navigation initiale ou des entrées de la région de navigation initiale ; et
la détermination de l'itinéraire de navigation initial à partir du premier itinéraire de navigation et du second itinéraire de navigation.

10. Système informatique, comprenant une mémoire et un processeur, dans lequel la mémoire est configurée pour stocker des instructions informatiques ; et le processeur est configuré pour invoquer les instructions informatiques, de sorte que le système informatique met en œuvre le procédé de navigation selon l'une quelconque des revendications 1 à 9.

11. Système de puce (130), dans lequel le système de puce (130) est utilisé dans un système de navigation ; le système de puce (130) comprend un circuit d'interface (132) et un processeur (131) ; le circuit d'interface (132) et le processeur (131) sont connectés l'un à l'autre par l'intermédiaire d'une ligne ; et le processeur (131) reçoit des instructions informatiques d'une mémoire du système de navigation par l'intermédiaire du circuit d'interface (132) et exécute les instructions informatiques, de sorte que le processeur (131) est en mesure de mettre en œuvre le procédé de navigation selon l'une quelconque des revendications 1 à 9.

12. Support de stockage lisible par ordinateur, configuré pour stocker des instructions informatiques, dans lequel, lorsque les instructions informatiques sont exécutées sur un dispositif informatique, le dispositif informatique est en mesure de réaliser le procédé selon l'une quelconque des revendications 1 à 9.

13. Produit programme d'ordinateur, comprenant des instructions informatiques, dans lequel lorsque les instructions informatiques sont exécutées sur un dispositif informatique, le dispositif informatique est en mesure de réaliser le procédé selon l'une quelconque des revendications 1 à 9.
